(19) Europäisches Patentamt / European Patent Office / Office européen des brevets

(11) **EP 4 065 616 B1**

(12) **EUROPEAN PATENT SPECIFICATION**

(45) Date of publication and mention of the grant of the patent:
**23.08.2023 Bulletin 2023/34**

(21) Application number: **20811378.7**

(22) Date of filing: **27.11.2020**

(51) International Patent Classification (IPC):
**C08F 8/32** (2006.01)          **C08F 290/06** (2006.01)
**C09D 5/16** (2006.01)

(52) Cooperative Patent Classification (CPC):
(C-Sets available)
**C08F 290/068; C08F 8/32; C09D 5/00;
C09D 5/1668; C09D 5/1675**          (Cont.)

(86) International application number:
**PCT/EP2020/083619**

(87) International publication number:
**WO 2021/105349 (03.06.2021 Gazette 2021/22)**

(54) **POLYMER CONETWORKS OF POLY(PYRIDINE-(METH)-ACRYLAMIDE) DERIVATIVES-CROSSLINKED BY TRANSITION METAL IONS- AND LINKED BY POLYDIMETHYLSILOXANE DERIVATIVES**

DURCH ÜBERGANGSMETALLIONEN VERNETZTE UND DURCH POLYDIMETHYLSILOXANDERIVATE VERBUNDENE POLYMER-CONETZWERKE VON POLY(PYRIDIN-(METH)-ACRYLAMID)-DERIVATEN

CO-RÉSEAUX POLYMÈRES DE DÉRIVÉS DE POLY(MÉTH)-ACRYLAMIDE DE PYRIDINE RÉTICULÉS PAR DES IONS DE MÉTAUX DE TRANSITION ET LIÉS PAR DES DÉRIVÉS DE POLYDIMÉTHYLSILOXANE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.11.2019  LU 101497**

(43) Date of publication of application:
**05.10.2022  Bulletin 2022/40**

(73) Proprietor: **Luxembourg Institute of Science and Technology (LIST)
4362 Esch-sur-Alzette (LU)**

(72) Inventor: **MUGEMANA, Clément
6700 Arlon (BE)**

(74) Representative: **Lecomte & Partners
76-78, rue de Merl
2146 Luxembourg (LU)**

(56) References cited:
• MARTIN ROTHER ET AL: "Self-Sealing and Puncture Resistant Breathable Membranes for Water-Evaporation Applications", ADVANCED MATERIALS, vol. 27, no. 42, 1 November 2015 (2015-11-01), pages 6620-6624, XP055723097, ISSN: 0935-9648, DOI: 10.1002/adma.201502761 cited in the application
• SEBASTIAN ULRICH ET AL: "Wide Range of Functionalized Poly( N -alkyl acrylamide)-Based Amphiphilic Polymer Conetworks via Active Ester Precursors", MACROMOLECULES, vol. 51, no. 14, 11 July 2018 (2018-07-11) , pages 5267-5277, XP055723090, WASHINGTON, DC, UNITED STATES ISSN: 0024-9297, DOI: 10.1021/acs.macromol.8b00841 cited in the application

- **SEBASTIAN ULRICH ET AL: "Pyranine-Modified Amphiphilic Polymer Conetworks as Fluorescent Ratiometric pH Sensors", MACROMOLECULAR RAPID COMMUNICATIONS, vol. 40, no. 21, 16 September 2019 (2019-09-16), page 1900360, XP055723101, DE ISSN: 1022-1336, DOI: 10.1002/marc.201900360**

(52) Cooperative Patent Classification (CPC): (Cont.)

C-Sets
**C08F 8/32, C08F 290/068;
C08F 290/068, C08F 220/22**

## Description

The invention is directed to the field of metallo supramolecular polymer conetworks of alkyl)$_a$-N-(pyridin-s-yl) (meth)-acrylamide moiety poly(pyridine-vinyl groups directly attached to a carbonyl carbon derivatives)-linked by polydimethylsiloxane derivatives and loaded with transition metal complexes type compounds (MSMC) for use as a film or coating on a substrate, to a method of preparation thereof and to applications in the medical field.

One of the outstanding features of biological systems is their ability to heal damage autonomously. Inspired by this observation, the design of man-made self-healing materials has exponentially increased over the last decade. Reversible interactions based on supramolecular interactions have often been preferred over their covalent counterparts to create self-healing materials. Among the supramolecular interactions available, metal-ligand bonds represent an attractive motif because of the possibility to tune the interaction strength by simply choosing the appropriate metal ion and ligand. In addition to self-healing feature, the use of metal complexes enlarges the properties and functionalities of the resulting materials, including but not limited to light responsive solvatochromic, conductive and highly stretchable polymers. Nevertheless, the current challenge in self-healing materials lies in design of materials that combine self-healing ability and good mechanical properties. The use of linear block copolymers or brush polymer architectures has led to self-healing nanostructured polymers with highly improved mechanical properties.

Amphiphilic polymer conetworks (APCNs) are nanostructured materials with a unique portfolio of properties, including swellability in water and in organic solvents, robust mechanical properties, optical transparency and tunable permeability. Moreover, they are easy and straightforward to synthesize. The covalently interconnected hydrophobic and hydrophilic polymer chains result in phase-separated morphologies. The mechanical properties can be adjusted by tuning the polymer composition and the chemical functionality of the polymer segments. APCNs have shown great potential for applications that range from contact lenses to separation membranes transdermal drug delivery system biomaterials for artificial pancreas, and as support materials for catalysts. Nevertheless, so far no self-healing APCNs have been reported in literature. Only self-sealing APCNs have been developed that close punctures by swelling in water (M. Rother, J. Barmettler, A. Reichmuth, J. V. Araujo, C. Rytka, O. Glaied, U. Pieles, N. Bruns, Advanced Materials 2015, 27, 6620-6624). However, they did not heal damage permanently. Therefore, hydrophilic monomers bearing a hydrophobic masking group have been used to prepare hydrophobic precursor conetworks]. They are then converted into amphiphilic materials by cleavage of the masking group, leading to phase-separated nanostructured polymer networks. Recently, pentafluorophenyl acrylate (PFPA) has been reported as a suitable hydrophobically masked monomer that simultaneously is in active ester and therefore allows to prepare a wide range of functionalized poly(acrylamide)-based APCNs (S. Ulrich, A. Sadeghpour, R. M. Rossi, N. Bruns, L. F. Boesel, Macromolecules 2018, 51, 5267-5277).

Polymer coatings provide various functionalities to different types of substrates and are inevitably exposed to mechanical loads that induce the formation of cracks leading to the loss of functionality of the coating. To ensure long-term stability and functionality, the durability must be addressed when designing new functional materials. The self-healing feature is of great interest for regenerating the inherent properties of the materials following mechanical damage. The most encountered self-healing polymer coatings lack transparency due to the concerned chemistry and the transparent ones are not covalently attached to the surface and may simply delaminates or detach over time. On the other hand, surface-attached polymer coatings do not undergo permanent healing process.

Mechanically robust transparent self-healing coatings were prepared via layer-by-layer process. The self-healing was triggered by immersing the coating in water. One of the drawbacks is the lack of stability, which can lead to the polymer etching or delamination when the coating is exposed to water or organic solvent for a prolonged period.

Intrinsic self-healing polymers have been developed to design transparent polymer using reversible covalent bonds such as imine bonds, a Schiff base reaction between amine and aldhehyde, Diels-Alder, disulfide bonds or reversible supramolecular interactions based on electrostatic interactions, hydrogen bonding, host-guest interactions and polyrotaxane-containing polymers, but the reported findings were limited to polymer films and have not yet been extended to surface-attached transparent coating.

Nanocomposite transparent self-healing polymers have been used to improve mechanical properties by introducing nanoparticles such as: inorganic adhesive titania bonded silica, silica-fluoropolymer hybrid nanoparticles for translucent superamphiphobic, core-shell nanofiber and electrospun core-shell, nanofiller-reinforced nanofiber coating and nanoscale clay platelets but they have not yet been used to design transparent polymer coating.

Extrinsic self-healing based on microcapsules and the release of healing agent for the design of mechanically robust transparent self-healing polymers is far the most convenient strategy as the microcapsules scatter light and consequently reduce light transmittance.

The stability of the polymer coating can be improved by introducing a linker between the polymer coating and the substrate, but on the other hand, it will affect the self-healing by reducing the polymer chain mobility. Self-sealing coating based on amphiphilic polymer conetworks (APCNs) covalently attached to breathable membranes were reported for the design of breathable membranes that have the ability to close punctures. Nevertheless, they did not repair the damage permanently as they needed to remain in a swollen state.

The invention has for technical problem to provide a solution to at least one drawback of the above cited prior art.

One of the aims of the invention relates to introducing reversible supramolecular interactions based on metal complexes into MSMC that would lead to self-healing materials, preferentially transparent, that exhibit robust mechanical properties and that may be used in the medical field. One of the strategies to sustain the reliability of performance is to avoid the formation of cracks arising from the formation of undetected minor damage, which would lead to complete failure of the materials.

For this purpose, the invention, as defined by the appending claims, is directed to metallo supramolecular polymer conetworks of poly[r(alkyl)$_a$-N-(pyridin-s-yl) (meth)-acrylamide moiety]$_{m,n}$ derivatives-complexed to a transition metal cation-linked by poly(dimethylsiloxane)$_p$alkyl-(meth)-acrylate moiety derivatives, wherein a is 0 or 1 or 2, p is an integer selected from the group consisting of from 50 to 70 and of from 120 to 180, r is integer of from 0 to 4, and s is an integer of from 2 to 4, and m and n, independently, are integers of from 5 to 11.

The Applicant has shown that such metallo supramolecular polymer conetworks (MSMC), that are typically tri-dimension conetworks, may advantageously be used for the preparation of films and/or coatings on various substrates, that may be used in the medical field verey advantageously providing anti-bacterial effect. Accordingly, such MSCN may be used as protective coating for optical medical devices, avoiding any bacterial proliferation, or, in some applications, for repairing damaged skin. The MSMC exhibit improved mechanical properties, such as exhibiting a Young modulus (E) of at least 100 MPa, preferentially of 100-170 MPa, better of 100-140 MPa with a tensile strength of 7-9 MPa and a strain at break of 0,25 to 0,35, measured at strain rate of 10 mm/min.

Coatings and/or films including MSMC are an interesting pathway for the design of mechanically robust coatings, preferably transparent coating and/or films. The desired functionality is achieved by tuning the chemical composition of the polymer segments, and most importantly, the covalently interconnected phase-separated domains advantageously smaller than light wavelengths, which results in optically transparent polymers and coatings. Accordingly, the design of phase-separated nanostructured polymers with the hard phase providing good mechanical properties while the soft one, equipped with the supramolecular bonds, endows the materials with the self-healing behaviour. The covalently interconnected hydrophilic chains of poly[r(alkyl)$_a$-N-(py-ridin-s-yl) (meth)-acrylamide moiety]$_{m,n}$ derivatives complexed to a transition metal cation and hydrophobic chains of poly(dimethylsiloxane)$_p$alkyl-(meth)acrylate moiety derivatives of MSMC result in phase-separated morphologies. In such a case, the transition metal cation is linking two nitrogen groups of the pyridine moiety.

Where the MSMC is used in the preparation of a coating, the latter is covalently linked to a substrate to avoid delamination or etching of the coating in contact with organic solvent or in water, in contrast to previously reported self-healing coatings, which would simply delaminate.

MSMC have the ability to swell reversibly in organic solvent or in water depending on chemical composition of the polymer conetwork. This ability was used to trigger the scratch-healing property where liner polymer chains would dissolve or precipitate.

For example, MSMC can lead to protective transparent and scratch-healing coatings for optical and medical field applications. The loading of fluorescent dye in MSMC can lead to sensor with tunable signals (pH, redox, temperature, solvent etc.), and MSMC coatings, exhibiting an ability to bind and to release on demand metal ions, may be transparent antifouling coatings.

In the context of the invention, "(meth)-acrylate" means acrylate and/or methacrylate derivatives. The Applicant has shown that such derivatives are necessary to obtain the desired properties.

The transition metal cation may advantageously be selected form the group consisting of zinc and manganese cations, preferentially zinc cation. These both zinc and manganese cations are the best suited metal cations because they are better strengthening the polymer network by cross-linking two nitrogen groups of the pyridine moiety while offering reversible interactions required for self-healing ability of MSMC.

In some embodiments, the alkyl group in the [r(alkyl)$_a$-N-(pyridin-s-yl)] entity may be selected from the group consisting of methyl, ethyl, propyl and butyl groups, optionally substituted by other alkyl groups, or a mixture thereof. The preferred alkyl groups for polymer coatings are methyl and ethyl, while aminopyridine may be the preferred for polymer films. The alkyl groups of the poly(dimethylsiloxane)$_p$alkyl-(meth)-acrylate moiety derivatives may be the same as those mentioned above. Higher carbon content alkyl groups may increase the Tg of poly(dimethylsiloxane)$_p$ reducing the mobility of the polymer chains needed for self-healing properties.

The value of "r" is depending of the nature of the alkyl group linked to the pyridine-s-yl group. More preferably, the integer "r" may be dependent on the alkyl group of (alkyl)$_a$r(pyridin-s-yl) moiety.

Consequently, when the alkyl is present, "a" being 1 or 2, preferably "a" being 1, r is 1 when the alkyl group is methyl, r is 2 when the alkyl group is ethyl, r is 3 when the alkyl group is propyl and r is 4 when the alkyl group is butyl. When "a" is 0, then there is no alkyl group, then "r" is 0, for example: aminopyridine.

The integer "s" in the pyridin-s-yl group is the position of N in the pyridine ring with regard to (meth)-acrylamide moiety. Accordingly, "s" is 2, 3 or 4. It is advantageously preferred that N in the pyridine ring is at the position para or 4. This specific para position enhances the interaction of the metal cation with N of the pyridine ring (intra-chain bonds). Other positions (2 or 3) favour the intra-chain bonds between two adjacent N in the cycle, which is less preferred.

It is very preferred that the transition metal cation bears a counter ion enhancing the coordinating strength, in addition to the fact that the counter ion acts as a bridging ligand leading to fast self-healing. In other words, without being bound by any theory, the counter ion is preferably selected to allow the transition metal cation to be surrounded by less nitrogen groups of the pyridine moieties.

The counter ion may then be selected among organic or inorganic anions. The inorganic anion is advantageously chloride or nitrate, providing the best coordinating strength and self-healing ability.

According to a preferred embodiment, the "m" and "n" integer values are selected based on the final use of the MSMC. When the MSMC is a film, "m" and "n" integer values are preferably of from 5 to 7, and when the MSMC is used to prepare a coated substrate, "m" and "n" integer values are preferably from 8 to 11. Higher integer values for "m" and "n" of 8 to 11 are preferably selected to enhance the swellability of the pyridine containing phase. The m,n values, independently, are preferably integer of from 5-10, more preferably m=n.

The MSMC product could be advantageously in the form of a film, which may be transparent having a thickness of from 200 $\mu$m to 500 $\mu$m, more preferably of from 250 $\mu$m to 450 $\mu$m, even more preferably of from 250 $\mu$m to 430 $\mu$m, most preferably of from 300 $\mu$m to 400 $\mu$m. Depending of the end use of MSMC, the polymer conetworks advantageously contains from 3 to 5 wt% of the transition metal cation, more advantageously from 3 to 4,7 wt% when used to prepare a film.

When the final use is a coating on a substrate, the polymer conetworks advantageously contains from 5 to 9 wt% of the transition metal cation, more advantageously from 6 to 8,6 wt%. These values are the preferred for the desired properties.

When the film is preferably used to be coated on a substrate, the thickness thereof is advantageously of from 4 $\mu$m to 10 $\mu$m, preferably of from 5 $\mu$m to 8 $\mu$m.

The integer p may preferentially be selected from the group consisting of ranges of from 60 to 70 and of from 130 to 170, of from 60 to 65 and of from 125 to 170, of from 60 to 65 and of from 125 to 150, of from 65 to 70 and of from 145 to 160. It appears that the best results are obtained for such p values.

The invention also relates to process of preparing the MSMC according to the invention. The process comprises the following steps of:

a) providing a reaction medium comprising a mixture of (alkyloxy)-(meth)-acrylate moiety derivatives-poly(dimethylsiloxane)$_p$ type compounds wherein p is an integer selected from the group consisting of from 50 to 70 and of from 120 to 180 and an active ester comprising a pentafluorophenyl-(meth)acrylate moiety, and performing an UV-initiated polymerization using a photoinitiator, for the obtention of poly[(pentafluorophenyl-(meth)-acrylate) moiety]$_{m,n}$ derivatives linked by poly(dimethylsiloxane)$_p$alkyl-(meth)-acrylate moiety derivatives, wherein "m", "n" and "p" are as defined above.
b) reacting the product obtained in step a) with a r-amino(alkyl)$_a$-N-s(pyridine) for obtaining poly[r-(alkyl)$_a$-N-(pyridin-s-yl) (meth)-acrylamide moiety]$_{m,n}$ derivatives linked by poly(dimethylsiloxane)$_p$alkyl-(meth)-acrylate moiety derivatives, wherein "r", "s" and "a" are as defined above;
c) complexation of the derivatives obtained in step b) by a transition metal cation in an organic solvent.

According to the process of the invention, it is possible to advantageously prepare a scratch-healing, preferably transparent, film or a coating on various substrates that is mechanically robust from amphiphilic polymer conetworks cross-linked by transition metal complexes and, depending on the final use, to provide coatings covalently attached onto the surface of a substrate for high resistance to delamination.

The final polymer, MSMC, is prepared in a three-step UV-initiated polymerization reaction offering the benefit of large-scale synthesis using only commercially available chemicals.

According to the process, the step a) is performed by the use of a photoinitiator. The preferred photoinitiator is selected from the group consisting of benzyldimethyl-ketals and hydroxyketones, or mixtures thereof. One example of a photoinitiator is Irgacure® 651 or those of the family of Irgacure® compounds, such as Irgacure® 184: 1-Hydroxy-cyclohexylphenyl-ketone and Irgacure® 2959: 2-Hydroxy-1-[4-(2-hydroxyethoxy)phenyl]-2methyl-1-propanone].

The mixture according to step a) includes an active ester of pentafluorophenyl-(meth)-acrylate moiety. The acrylate moiety is defined above. The preferred active ester is pentafluorophenyl acrylate or pentafluorophenyl methacrylate, especially pentafluorophenyl acrylate (PFPA).

The (alkyloxy)-(meth)-acrylate moiety derivatives-poly(dimethylsiloxane)$_p$ type compounds, also expressed in the specification as poly(dimethylsiloxane)$_p$ moieties, are preferably depending on the end use thereof, and are those preferably exhibiting viscosity of from 50 to 90 cSt (standard conditions), having a Mn of from about 4000-5000, or 125-250 cSt, having a Mn of from about 8000 to 11 000, the alkyl group and (meth)-acrylate moiety derivatives being such as defined above. An example of such derivatives is $\alpha,\omega$-propyloxymethacrylate-

terminated poly(dimethylsiloxane)$_p$.

The UV-initiated polymerization was carried out preferably of from 2 to 5 min, preferably of from 2 to 3 min. Known devices are used for said step a). Before UV-irradiation, the mixture may be placed in a mould. The step a) may classically be performed at ambient temperature, or the mixture may be heated below the boiling temperature of the used solvent, if present, and/or of the mixture components.

Advantageously, the amount of the active ester in the mixture may be of from 45 wt% to 60 wt% allowing the preparation of the final product (MSMC) which is transparent and exhibiting enhanced optical properties. Accordingly, the amount of the poly(dimethylsiloxane)$_p$ moieties in the mixture may be of from 40 wt% to 55% wt%. The mixture in the reaction medium may additionally be added, when appropriate-depending of the liquid or solid nature of the starting derivatives and compounds, in an organic solvent, preferably THF, halogenated alkanes, aromatics, ketones, or mixture thereof, amount of which may be of from 5 to 10 wt%. The weight% of the three considered reactants are based on the total weight, which may be higher than 100 wt%.

The resulting polymer of step a) are poly[(pentafluorophenyl-(meth)-acrylate moiety]$_{m,n}$ derivatives, also referred to moiety I, linked by poly(dimethylsiloxane)$_p$alkyl-(meth)acrylate moiety derivatives, also referred to moiety II.

The concentration of the photoinitiator is 0,5 wt% to 1 wt% of the total monomer mixture.

The obtained derivatives may contain from 40 wt% to 50 wt%, preferably from 42 wt% to 45 wt% of the moiety I.

The step a) may further include a washing step of the resulting polymer carried out with the solvent used for the polymerization, at temperatures typically of from 40°C to 70°, depending of the nature of the solvent. The washing step may also be carried out for a period of time typically of from 8 to 16h in order to remove unreacted active ester and/or poly(dimethylsiloxane)$_p$ type compounds.

The FTIR spectrum of the polymer resulting from step a) revealed the characteristic absorption bands of the active ester typically at 1783 cm$^{-1}$ (C=O stretch) and 1571 cm$^{-1}$ (the fluorinated aromatic ring stretch). The analysis by Differential Scanning Calorimetry (DSC) showed two distinct Glass Transition Temperature (Tg) at, for example, about -120°C and 45°C. These values correspond respectively to moieties II and I.

The step b) is considered as an amidation reaction of the polymer resulting from steps a) with the r-amino(alkyl)$_a$-N-s(pyridine) compound. The obtained compounds are poly[r(alkyl)$_a$-N-(pyridin-s-yl) (meth)-acrylamide moiety]$_{m,n}$ derivatives (moiety III) linked by poly(dimethylsiloxane)$_p$alkyl-(meth)-acrylate moiety derivatives (moiety II).

In step b), the product obtained in step a) (moieties I and II) is reacted with an r-amino(alkyl)a-N-s(pyridine) compound, preferably in presence of an appropriate organic solvent, preferably THF, halogenated alkanes, aromatics, ketones. The solvent volume is chosen by the one skilled in the art to perform the reaction of both considered entities, whether at lab scale, then typically of from 10 to 200 mL, or at industrial scale.

In order to synthesize final products resulting from steps c), (MSMC), the amount range of r-amino(alkyl)$_a$-N-s(pyridine) compound in the reaction medium is advantageously of from 1,5 molar eq. to 2,6 molar eq. based on the poly[(pentafluorylphenyl-(meth)-acrylate moiety]$_{m,n}$ derivatives linked by poly(dimethylsiloxane)$_p$alkyl-(meth)-acrylate moiety derivatives molar content.

As previously mentioned, the integer "s" in the pyridin-s-yl group is the position of N in the pyridine ring. Accordingly, "s" is 2, 3 or 4. It is advantageously preferred that N in the pyridine ring is at the position para or 4. This specific para position enhances the interaction of the metal cation with N of the pyridine ring (intra-chain bonds). Other positions favour the intra-chain bonds between two adjacent N in the cycle, which is less preferred.

The alkyl groups of the r-amino(alkyl)a-N-s(pyridine) are not limited with the proviso that the final product exhibits the desired properties, and may be selected from the group consisting of methyl, ethyl, propyl and butyl, optionally substituted by other alkyl groups, or mixture thereof. When the integer a is 0, there are no alkyl groups in the aminopyridine.

The temperature reaction of step b) is advantageously of from 40°C to 70°C, and is in fact selected to be typically below that the boiling temperature of the reaction medium. The reaction time is typically of from 4h to 16h, especially from 8h to 16h.

The step b) may further include an incubating step in an organic solvent, preferably the same solvent as used for the step b), to remove, for example, the pentafluorophenol residue(s) from the bulk of the obtained derivatives. The incubating step may be carried from 8 h to 24h, at temperatures of from 40°C to 70°. At the end of the reaction or after the optional incubating step, the reaction medium may be dried. The derivatives of step b) may remain solid and stored in a desiccator, for example.

According to the FTIR spectrum analysis, the peak assigned to the active ester disappeared and was replaced by the amide stretch signal, for instance at 1685 cm$^{-1}$ and the pyridine ring vibration signal at 1592 cm$^{-1}$. Analysis by DSC confirmed the functionalization by revealing Glass Transition Temperatures (Tg) at about 70°C-80°C, especially circa 75°C, that can be assigned to the moiety III.

The step c) is the complexation of the derivatives obtained in step b) by a transition metal cation in an organic solvent.

This latter step allows the obtention of the product of the invention, namely MSMC, which properties and characteristics are as above described.

Namely, step c) leads to poly[r(alkyl)$_a$-N-(pyridin-s-yl) (meth)-acrylamide moiety]$_{m,n}$ derivatives-complexed to a transition metal cation- linked by poly(dimethylsiloxane)$_p$alkyl-(meth)-acrylate moiety derivatives, wherein "a" is 0 or 1 or 2, "p" is an integer selected from the group consisting of from 50 to 70 and of from 120 to 180, "r" is integer of from 0 to 4, and "s" is an integer of from 2 to 4, and "m" and "n", independently, are integers of from 5 to 11.

The transition metal cation is advantageously selected form the group consisting of zinc and manganese cations, preferentially zinc cation. These both zinc and manganese cations are the best suited metal cations because they are better strengthening the polymer network by cross-linking two nitrogen groups of the pyridine moiety while offering reversible interactions required for self-healing ability of MSMC.

It is very preferred that the transition metal cation bears a counter ion enhancing the coordinating strength, in addition to the fact that the counter ion acts as a bridging ligand leading to fast self-healing. In other words, the counter ion may advantageously be selected to allow the transition metal cation to be coordinated by less nitrogen groups of the pyridine moieties.

The counter ion may then be selected among organic or inorganic anions. The inorganic anion is advantageously chloride or nitrate or mixture thereof, providing the best coordinating strength and self-healing ability. Chloride anion is the most preferred due to high coordinating strength thereof and because it is also acting as bridging ligand. According to the invention, the transition metal cation is selected from salts of $ZnCl_2$, $Zn(NO_3)_2$, $MnCl_2$ and/or $Mn(NO_3)_2$.

The reaction medium mixture of step c) includes an organic solvent which allows the solubility of the transition metal salt, and may preferably be THF, halogenated alkanes, aromatics, ketones, ethers, alcohols or mixture thereof, concentration of which may be of from 5 to 10 wt%, and is in fact selected to be typically below the boiling temperature of the reaction medium. The reaction is performed more preferably in THF to achieve good swelling of the derivatives of step b). It should be pointed out that the step b) derivatives are insoluble in the reaction medium of step c).

The complexation reaction may be performed at temperatures of from 40°C to 70°C. The reaction duration is typically of from 8h to 16h. The step c) may further include a rinsing step in an organic solvent, preferably the same solvent as used for the step c), to remove, for example, the unreacted compounds. The solvent volume is chosen by the one skilled in the art to perform the reaction of both considered entities, whether at lab scale, then typically of from 10 to 200 mL, or at industrial scale. At the end of the reaction or after the optional rinsing step, the reaction medium may be dried for a dried-state storage of the compound.

The amount of transition metal salt may be in the range of from 0,03 mol/L to 0,05 mol/L, preferably of from 0,03 mol/L to 0,045 mol/L. These transition metal cation concentrations permit the desired properties of the MSMC to be achieved.

The Atomic Force Microscopy (AFM) analysis revealed spherical interconnected moiety II domains in a moiety III complexed to a transition metal cation phase. The moiety II domains are bigger, and the hydrophilic domains appear thinner than the domains of the metal-free derivatives (of step b)). Thus, the incorporation of metal ions into the derivatives of step b) does not change the overall phase morphology, but increases the size of hydrophobic domains, while it decreases the size of the hydrophilic domains due to the cross-linking of the moiety III phase.

The complexation of transition metal cations by moiety III is confirmed by solid-state NMR analysis.

It should be highlighted that all selected process features and parameters are those allowing the preparation of the MSCS

The invention also relates to a film comprising the MSMC of the invention, exhibiting all properties and characteristics as above described.

The invention also concerns a material comprising a coated film onto a substrate, said film being based on the MSMC of the invention.

Various substrates may be used. These may be organic or inorganic substrates, such as glass, ceramic, metallic or polymeric substrates, known to the one skilled in the art.

A process for preparing a material including the MSMC of the invention, coated on a substrate, comprises the following of step of:

1) grafting s(trialkyloxy-silyl)alkyl(meth)-acrylate derivatives onto the substrate,
2) providing a reaction medium comprising a mixture of (alkyloxy)-(meth)-acrylate moiety derivatives-poly(dimethylsiloxane)$_p$ type compounds wherein p is an integer selected from the group consisting of from 50 to 70 and of from 120 to 180, and an active ester comprising a pentafluorophenyl-(meth)-acrylate moiety and a photoinitiator, contacting said mixture with the functionalized substrate of step 1), performing an UV-initiated polymerization, for the obtention poly[(pentafluorophenyl-(meth)-acrylate moiety]$_{m,n}$ derivatives linked by poly(dimethylsiloxane)$_p$alkyl-(meth)-acrylate moiety derivatives bound to the functionalized substrate, wherein, m, n, p, are above defined;
3) reacting the poly[(pentafluorolphenyl-(meth)-acrylate moiety]$_{m,n}$ derivatives linked by poly(dimethylsiloxane)$_p$alkyl(meth)-acrylate moiety derivatives which are bound to the functionalized substrate, with an r-amino(alkyl)$_a$-N-s(pyridine) for obtaining poly[r-(alkyl)$_a$-N-(pyridin-s-yl) (meth)-acrylamide moiety]$_{m,n}$ derivatives linked by poly(dimethylsiloxane)$_p$alkyl-(meth)-acrylate moiety derivatives, bound to the functionalized substrate, wherein "r", "s" and "a" are as defined above;
4) complexation of the derivatives obtained in step 3) which are bound to the functionalized substrate, by a transition metal cation in an organic solvent.

The process for preparing a material including the MSMC of the invention, coated on a substrate, preferably includes steps a)-c) on the process for the preparation of MSMC according to the invention which are modified due to the presence of a functionalized substrate. Nevertheless, the process features and parameters are essentially based on the synthesis of MSMC complexed with a transition metal cation, as described above.

Specifically, the process for preparing a material including the MSMC coated on a substrate comprises following characteristics.

Step 1) includes the grafting step of s(trialkyloxy-silyl)alkyl(meth)-acrylate derivatives. The (meth)-acrylate is as previously defined, and the alkyl groups are preferably selected from the group consisting of methyl, ethyl, propyl, butyl or mixtures thereof. Non limitative examples of such s-(trialkyloxy-silyl)alkyl(meth)-acrylate derivatives may be 1-(trimethoxysilyl)methylacrylate, 2-(trimethoxysilyl)ethylacrylate, 3-(trimethoxysilyl)propylacrylate, 1-(trimethoxysilyl)methylmethacrylate, 2-(trimethoxysilyl)ethylmethacrylate, 3-(trimethoxysilyl)propylmethacrylate 1-(triethoxysilyl)methylacrylate, 2-(triethoxysilyl)ethylacrylate, 3-(triethoxysilyl)propylacrylate, 1-(triethoxysilyl)methylmethacrylate, 2-(triethoxysilyl)ethylmethacrylate, 3-(triethoxysilyl)propylmethacrylate, and the like and/or a mixture thereof.

Without been bound by any theory, it is assumed that, if a glass substrate is used, the O-groups of the glass surface of the substrate are covalently attached to the silyl groups. The surface of polymer substrates can be modified by the technique of plasma while electrochemistry can be used to modify the surface of metallic substrates.

Various substrates may be used. These may be organic or inorganic substrates, such as glass, ceramic, metallic or polymeric substrates, known to the one skilled in the art. Dimensions of the substrate are not limitative and may of from $5\ cm^2$ to $10\ cm^2$, or even more when the process is performed at an industrial scale.

Step 1) is preferably conducted in a presence of an organic solvent when appropriate-depending of the liquid or solid nature of the starting derivatives, in an organic solvent, preferably THF, halogenated alkanes, aromatics, like toluene, ketones, or mixture thereof.

Concentrations of s(trialkyloxy-silyl)alkyl(meth)-acrylate derivatives of the Step 1) in the organic solvent may preferably be comprised in a range of values of from 10 vol% to 30 vol%.

The grafting step 1) may be carried out from 8h to 16h, at room temperature, by reacting the s(trialkyloxy-silyl)alkyl(meth)-acrylate derivatives with the substrate, preferably s(trialkyloxy-silyl)alkyl(meth)-acrylate derivatives being in a reaction medium at the concentration specified above.

After step 1) and before step 2), the process may include a washing step of the functionalized substrate with, preferably, the same solvent as for the step 1) and with an alcohol, such as ethanol or the like and dried, for example, under vacuum. Prior to step 1), the substrate may be treated, for example, for cleaning it. When a glass substrate is used, said substrate is immersed in a Piranha solution or the like.

The (alkyloxy)-(meth)acrylate moiety derivatives-poly(dimethylsiloxane)$_p$ type compounds to be selected for step 2), are those preferably exhibiting viscosity 125-250 cSt and are as above defined.

It should be pointed out that steps 3) and 4) of the considered process are similar to steps b) and c) of the process for the preparation of MSMC. In the context of the invention, the grafted functionalized substrate of step 1) is not modified by further steps 2)-4).

The amount range of r-amino(alkyl)a-N-s(pyridine) compound in the reaction medium is advantageously of from 0,05 molar eq. to 0,1 molar eq. based on the poly[(pentafluorylphenyl-(meth)-acrylate moiety]$_{m,n}$ derivatives linked by poly(dimethylsiloxane)$_p$alkyl-(meth)-acrylate moiety derivatives molar content. It should be pointed out that amount range of r-amino(alkyl)a-N-s(pyridine) compound as for step b), could also be used.

The polymer conetworks obtained through step 4) advantageously contain from 5 to 9 wt% of the transition metal cation, more advantageously from 6 to 8,6 wt%, which may be obtained by immersing the coating on the substrate into 3 to 7 mM concentration of the transition metal salt, even if concentrations thereof as mentioned for step c) could also be used, but it is less preferred.

The invention also relates to the use of the MSMC of the invention or as obtainable according to the process of the invention for use as an antibacterial agent. Indeed, biofouling represents a great concern in particular for underwater optical devices (camera, diving goggles and submarine portholes) where the surface colonization from undesired organisms interferes with the transparency. For such a specific application, optical properties must remain unaltered during the lifetime of the materials, thus making underwater transparent antifouling coatings a highly attractive research field. MSMC coatings represent an ideal material as they combine optical transparency and fouling release properties according to their chemical composition. The transparency arises from the phase separated domains smaller than the wavelength of light, while their fouling release property is enhanced by their amphiphilic nature on the nanoscale. The adhesion of mucus secreted by a microorganism to wet the surface is energetically unfavourable due to the coexistence of hydrophobic and hydrophilic phases on the surface, leading to the inhibition of microorganism adhesion. In addition, the loading of metal complexes into the coating inhibits the adhesion of bacterial agent such as *Escherichia coli* SCC1 (*E. coli)* onto the surface.

The Applicant has shown that a substrate that is coated with the compounds of the invention, do inhibit the adhesion of bacteria of said surface, with comparison to the uncoated substrate, of between 5 to 10 fold.

Brief description of the drawings

Other features and advantages of the present invention will be readily understood from the following non limitative examples and drawings:

- Figure 1 is a schematic three-step synthesis of an MSMC: poly[N-(pyridine-4-yl)(methacrylamide moiety]$_{m,n}$ derivatives, complexed to Zn(II) cations, linked by poly(dimethylsiloxane)$_p$ $\alpha,\omega$-propylmethacrylate moiety derivatives (PNP4A-Zn(II)-I-PDMS) ("a" is 0);

- Figure 2 shows ATM-FTIR spectra of poly[(pentafluorylphenyl-acrylate)$_6$ moiety (PPFPA) linked by poly(dimethylsiloxane)$_{60}$ $\alpha,\omega$-propyl-methacrylate moiety (PDMS$_{60}$) - (PPFAP-I-PDMS$_{60}$) and of poly[N-(pyridin-4-yl) acrylamide]$_6$ linked by poly(dimethylsiloxane)$_{60}$ $\alpha,\omega$-propylmethacrylate (PNP4A-I-PDMS$_{60}$);

- Figure 3 shows a DSC of PPFAP-I-PDMS$_{60}$ and PNP4A-I-PDMS$_{60}$, PDMS$_{60}$ being noted PDMS;

- Figure 4 represents AFM mode images of the cross-section of PPFPA-I-PDMS$_{60}$ (Fig. 4a) PNP4A-I-PDMS$_{60}$ (Fig. 4b) and (PNP4A-Zn(II)-I-PDMS$_{60}$) (Fig. 4c);

- Figure 5 shows solid state $^{13}$C NMR spectra of the PNP4A-I-PDMS$_{60}$ and the PNP4A-I-PDMS$_{60}$ complexed by ZnCl$_2$;

- Figure 6 shows an optical microscopy image of cross-section of scratched free standing polymer film of PNP4A-I-PDMS$_{60}$ complexed by ZnCl$_2$;

- Figure 7 depicts self-healing of scratches in PNP4A-I-PDMS$_{60}$ complexed by ZnCl$_2$. Optical microscopy images of scratched free standing polymer films (a and c) and of the same sample after 16 hours at 80°C (b) and 120°C (d);

- Figure 8 represents uniaxial tensile tests of PNP4A-I-PDMS$_{60}$ complexed by ZnCl$_2$, and PNP4A-I-PDMS$_{60}$ without Zn(II) (dashed lines) at a strain rate of 10 mm min$^{-1}$; Pristine samples, samples after scratch damage, and sample after healing of scratches at 120°C for 16 hours;

- Figure 9 is a schematic three-step synthesis of an MSMC on a functionalized glass substrate: poly[2-ethyl-N-(pyridin-4-yl)]acrylamide]$_{m,n}$ complexed to Zn(II) cations-linked by poly(dimethylsiloxane)$_p$-$\alpha,\omega$-propyimethacrylate (PNP4EA-Zn(II))-I-PDMS);

- Figure 10 shows transmittance measurements of functionalized glass substrate coated with PPFAP-I-PDMS$_{130}$ (PPFAP and PDMS having the same meanings as in Fig.1 & 2), PNP4EA-I-PDMS$_{130}$ (not complexed to Zn(II)), PNP4EA-Zn(II)-I-PDMS$_{130}$.

- Figure 11 are surface AFM height and phase mode images of PPFPA-I-PDMS$_{130}$ (a: height and b: phase); PNP4EA-I-PDMS$_{130}$ (c: height and d: phase) and PNP4EA-I-PDMS$_{130}$ (e: height and f: phase) loaded with ZnCl$_2$ polymer coatings. (Scale bar: 100 nm);

- Figure 12 represents volumetric degree of swelling SVol of PNP4EA-I-PDMS$_{130}$ and PNP4EA-Zn(II)-I-PDMS$_{130}$ polymer conetworks films in various organic solvents and in water. (mean values of n = 3 independent measurements, error bars represent SD);

- Figure 13 are optical microscope images of the PNP4EA-Zn(II)-I-PDMS$_{130}$ glass-coated polymer coating of the damaged surfaces (a to d) and after self-healing (e to h) in presence of THF (e), n-hexane (f), 2-propanol (g) and DMF (h).

- Figure 14 represents the numbers of bacteria present in a glass substrate covered by PNP4EA-Zn(II)-I-PDMS$_{130}$ with comparison with uncoated glass.

Properties, features and technical effects of the following examples are not limitative and could be generalised to the inventive concept of the invention.

Examples of various embodiments

Materials

All solvents (purity > 95%) were purchased from Sigma-Aldrich. Pentafluorophenyl acrylate (purity > 95%), 4-Aminopyridine, 4-(2-Aminoethyl)pyridine were purchased from TCI. $\alpha,\omega$-propyloxymethacrylate-terminated poly(dimethylsiloxane)$_{60}$ (PDMS$_{60}$, viscosity of 125-250 cSt., Mn ($^1$HNMR) = 8400 or $\alpha,\omega$-propyloxymethacrylate-terminated poly(dimethylsiloxane)$_{100}$ of viscosity of 50-90 cSt, Mn ($^1$HNMR) = 4200) were purchased from ABCR (Germany). Irgacure 651 (2,2-dimethoxy-1,2-diphenylethan-1-one) (99%), 3-(trimethoxysilyl)propyl methacrylate (98%) and ZnCl$_2$ ($\geq$98 %) were purchased from Sigma Aldrich. All reagents were used without further purification unless otherwise noted.

Glass slides (76 × 26 mm and 1 mm thick) were purchased from Carl Roth. Reactants devoted to glass substrate with the MSMC bacterial analysis are given in the Examples.

## UV Photopolymerization

A customised UV conveyor system designed by Novachem and equipped with an UV-C Flood Lamp, fitted with Mercury bulb, with peak emission at 225 nm was used.

## Infrared (IR) Spectroscopy

Attenuated total reflectance Fourier transform infrared (ATR FT-IR) spectra were recorded on a Bruker Tensor 27 spectrometer on the surface of the polymer conetworks. Proteus software was used to collect and analyze the data.

## Atomic Force Microscopy (AFM)

AFM analysis was conducted on a scanning probe microscope MFP3D infinity (Asylum Research, Santa Barbara). Measurements were performed at ambient conditions in tapping mode with a silicon AFM probe AC160TS-R3 (Olympus, Japan) with a force constant of 26 N m$^{-1}$ and resonance frequency of 300 kHz. Topography was acquired by maintaining the amplitude at the first cantilever resonance constant via the electronic feedback loops. All the nanomechanical measurements of the coating were performed in fast force mapping with 30nN force setpoint, enabling the recording of topography and a force-curve at each pixels of the 256 pixels × 256 pixels images. These measurements were performed using a AC240TS tip (2,4 N/m (Olympus). Tips spring constant and inverse optical lever sensitivities were obtained with the Sadler non-contact. The polystyrene/low density polyethylene (PS/LDPE) (Bruker, Santa Barbara) copolymer was used as the reference, while the LDPE domains were used to calibrate the AFM tip and for the fitting of the force curves. The viscoelastic properties of the surface were determined according to Oliver-Pharr model. The recorded data were fitted according to the parameters determined from the LDPE analysis, and elastic modulus were extracted from of the entire scanned surface.

## Optical microscopy

The microscopy images were recorded on Nikon Eclipse LV 100 (3x2 Stage Japan) equipped with LU Plan Fluor objectives. 5 x/ 0,15 A WD 18 and 10 x/ 0,30 A WD15 were mainly used. The surfaces of APCNs films were captured using NIS Elements BR 2.30 software with a resolution of 800 × 600 pixels.

## ICP -MS

The polymer samples were mineralised in microwave oven (Multiwave Pro, Anton Paar, Graz, Austria). 7 mL of nitric acid (HNO3 for trace analysis min 67 %, LGC Standards, Molsheim, France) and 3 mL of $H_2O_2$ (30 % w/w, Suprapur, Merck, VWR International, Leuven, Belgium) were added to 10 mg of the samples and mineralisation was performed at 200°C under high pressure of 30 bars. At the end of the mineralisation process, samples were diluted up to 25 mL of ultra-pure water. The samples were then diluted and zinc was analysed by Inductively Coupled Plasma Mass Spectrometry (ICP-MS 7900, Agilent Technologies, Santa Clara, California, United States).

## Swelling measurements

Dry samples of 0,5-2 cm$^2$ were immersed into THF, hexane, water or DMF overnight. The edge lengths $L_i$ before and after swelling were measured with a ruller and the average volumetric degree of swelling $S_{Vol}$ was subsequently determined from the sample edges (length L) as with n denoting the number of edges.

$$Svol = \frac{1}{n} \sum_{i=1}^{n} \left( \frac{Li,swollen}{Li,\,dry} \right)$$

## UV-Vis analysis

The transmittance of the glass-coated polymer conetwork was measured on Perkin Elmer Lambda 35 UV-visible spectroscopy.

## Differential Scanning Calorimetry (DSC)

DSC traces were recorded on a NETZSCH DSC 240 F1. A heating rate of 20 K min$^{-1}$ was set from -170°C to 200°C as the temperature range under nitrogen flow. The data was collected and analyzed by NETZSCH Proteus Thermal Analysis software. The glass transition temperatures were determined on the mid-point of the transition for the second heating cycle.

## Tensile tests

Mechanical tests were performed on Instron (59-67) tensile test machine. The samples were cut into rectangular strips of 5 × 1 cm$^2$ and gripped using pneumatic clamps. Tests were performed with a strain rate of 10 mm min$^{-1}$. The Young's moduli for MSMC films were calculated from the slope of the initial linear region of stress-stain curves. Each measurement was repeated at least three times. Mean values and standard deviation are reported.

## Elemental analysis

Elemental analysis of the polymer conetworks films were performed at Mikroanalytisches Labor Pascher Germany. Different methods were used to measure the content of each element: conductometric detection after combustion was used for carbon; IR-detection after combustion was used for hydrogen; volumetric detection after combustion (according to Dumas) was used for nitrogen and detection by ion-sensitive electrode after Schöniger combustion was used for fluorine.

## Bacterial adhesion test

The surfaces comprising MSMC were pre-sterilized by autoclaving at 105°C, a process validated by a preliminary test. Each surface was glued in a 35 mm petri dish with an adhesive (Aqua Silicone, Den Braven, Netherlands) to prevent flotation of the sample.

## Preparation of the bacterial suspension

The study was carried out with the strain *Escherichia coli SCC1 (E. coli),* the culture medium chosen for the study is a non-nutritive medium NaCl (9 g/L). The bacteria stored in the freezer at -80°C were cultured on D-2 (2 days before experiments) on Luria Broth (LB) agar for obtaining colonies. On D-1 a solution of nutrient medium LB was inoculated with a colony of E. coli. coli and incubated at 30°C, 15h - 20h.

On D-0 (the day of the exeriment), a new bacterial culture was prepared with 10%-15% of the preculture and incubated for 3h-5h at 30°C. This culture was centrifuged at 3500 rpm for 20 min, the pellet of bacteria was resuspended in NaCl (9 g/L) to obtain an OD (optical density) at 600 nm of 0,01.

The surfaces were incubated in 3-5 mL of the bacterial solution prepared according to the previous protocol for 1 hour at 30 ° C. and then rinsed 5-10 times in NaCl at 9 g/l before being observed under the LSM800 (Zeiss) right confocal microscope.

On each surface 10 random areas were imaged and analyzed using FiJi image processing and analysis software. In each of these areas the number of bacteria was determined.

## Example 1: step a): Synthesis of derivatives of poly[(pentafluorylphenyl)acrylate]$_6$ moiety (PPFPA) linked by poly(dimethylsiloxane)$_{60}$ α,ω-propylmethacrylate moiety (PDMS)$_{60}$ - (PPFPA-I-PDMS$_{60}$)

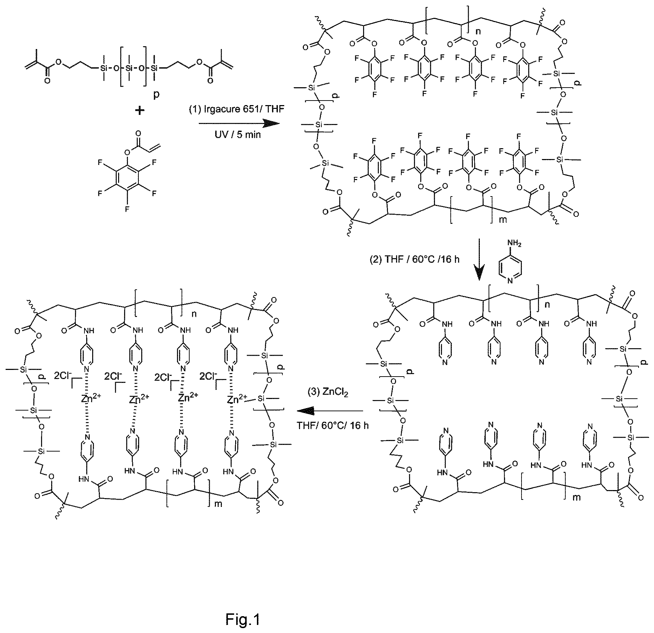

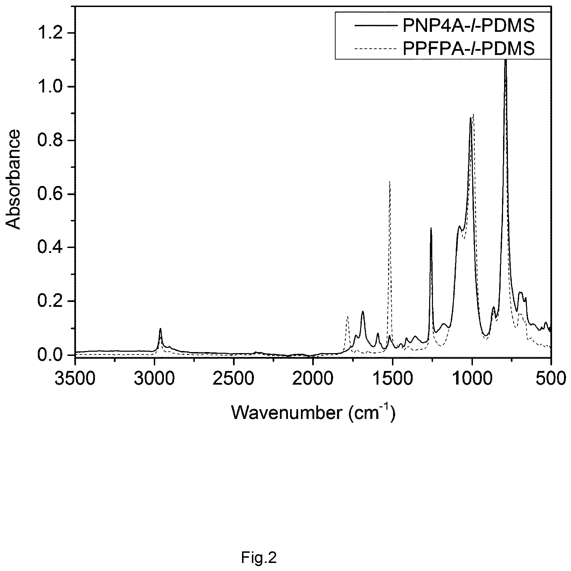

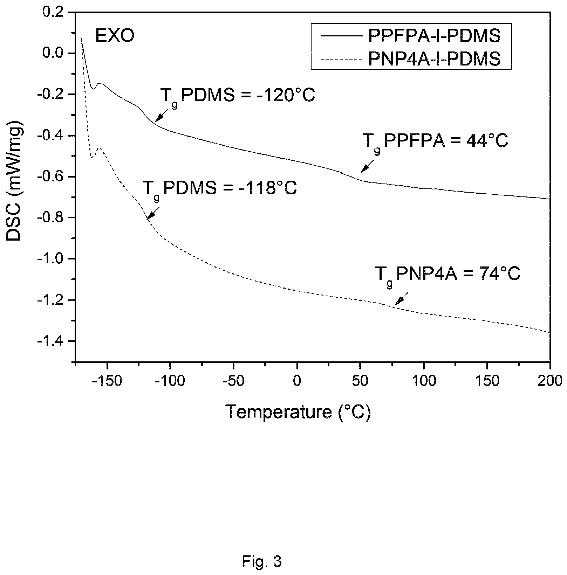

The PPFPA-I-PDMS$_{60}$ conetwork precursors were synthesized by UV-initiated polymerization in the presence of Irgacure 651 (2,2-dimethoxy-1,2-diphenylethan-1-one. A reaction medium, comprising a mixture containing 51 wt% of pentafluorophenyl acrylate (PFPA) and 48,5 wt% of α,ω-propyloxymethacrylate-terminated poly(dimethylsiloxane)$_{60}$, was prepared, and further diluted with 10 wt% of THF into which the initiator Irgacure 651 had been dissolved at 0,5 wt% (Figure 1). A U-shaped 500 μm thick Teflon membrane was tighten between two glass slides covered with a brown polypropylene (PP) tape, forming a mould (not shown). The monomer mixture was filled into the mould and irradiated with UV light during 2,5 min. The resulting freestanding and optically transparent film of ca. 430 μm thick, 7 cm length, and 1,7 cm width, was transferred into a screw cap bottle and washed in THF at 60°C overnight in order to remove unreacted PFPA and PDMS cross-linker. The content of PPFPA in the polymer was 43 wt% PPFPA as measured by elemental analysis. The FTIR spectrum of the polymer conetwork precursor revealed the characteristic absorption bands of the active ester at 1783 cm$^{-1}$ (C=O stretch) and 1571 cm$^{-1}$ (the fluorinated aromatic ring stretch) as shown in Figure 2. DSC analysis of the precursor conetwork revealed two distinct glass transition temperatures at ca. -120°C and 44°C. They correspond to the PDMS$_{60}$ and active ester phases, respectively (Figure 3). FT-IR measurements: u= 2963, 1783, 1665, 1571, 1471, 1451, 1393, 1260, 1078, 990, 860, 795, 702, 623 (cm$^{-1}$).

## Example 2: step b): synthesis of poly[N-(pyridin-4-yl)acrylamide]$_6$ (moiety III), linked to poly(dimethylsiloxane)$_{60}$α,ω-propylmethacrylate (moiety II) (PNP4A-I-PDMS$_{60}$).

4-Aminopyridine (0,176 g - 1,868 mmol) was dissolved in 50 mL of THF and the solution was transferred into a screw cap bottle (250 mL). A PPFPA-I-PDMS$_{60}$ film (0,416 g - 0,747 mmol of PPFPA) was immersed in the solution, and the bottle was placed overnight into glycerol bath heated at 60°C to yield poly[(N-(pyridin-4-yl)acrylamide)]$_6$-I-poly(dimethylsiloxane)$_{60}$ methacrylate (PNP4A-I-PDMS$_{60}$).

According to the FTIR spectrum analysis, the peak assigned to the active ester disappeared and was replaced by the amide stretch signal at 1685 cm$^{-1}$ and the pyridine ring vibration signal at 1592 cm$^{-1}$ (Figure 2). DSC analysis confirmed the functionalization by revealing a new Tg at 74°C that can be assigned to the PNP4A phase (Figure 3). Elemental analysis of nitrogen allowed to determine the concentration of PNP4A corresponding to 18,5 wt% corresponding to ca. 70 % of the yield considering the determined content of the activated ester precursor. The higher glass transition temperature of PNP4A arises from stronger π-π interactions inherent to N-heterocyclic aromatic rings. It is worth noting that the Tg of the PDMS$_{60}$ phase remained almost unchanged (ca. -118°C).

The swelling ability of the polymer conetwork was tested in various organic solvents and water. One of the outstanding features is their ability to swell both in organic solvents and in water, which can be tuned by the composition of the polymer conetwork and its chemical functionality.

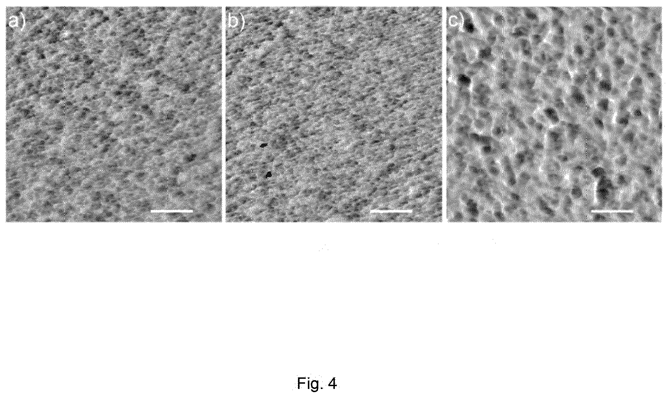

The polymer conetwork films were immersed in THF, a good solvent of the PNP4A and PDMS$_{60}$ phases. An average volumetric degree of swelling (SVol) of 2,14 $\pm$ 0.14 revealed a good swelling ability of the polymer conetwork in THF (Figure 4). Immersing the film in n-hexane, a selective solvent of PDMS$_{60}$, resulted in lower swelling (Svol = 1,48 $\pm$ 0,10), because the PNP4A phase did not swell. A slightly lower swelling ability of Svol = 1,42 $\pm$ 0,06 was determined in DMF, a selective solvent of the PNP4A phase. In contrast, when the films were immersed in water, they revealed a poor swelling ability with only a Svol of 1,07 $\pm$ 0,10. Most likely, hydrophobic interactions between N-heterocyclic aromatic groups hindered the swelling of the polyacrylamide phase in water. The phase morphologies of the polymer conetworks was analyzed by AFM phase mode imaging. A contrast between hard and soft phases arising from their difference in energy dissipation is expected. The bulk morphology of the PPFPA-I-PDMS$_{60}$ conetworks revealed phase-separated morphologies with interconnected spherical PDMS$_{60}$ domains (ca. 10 nm in diameter) that are homogenously dispersed in the PPFPA matrix. The PNP4A-I-PDMS$_{60}$ conetworks exhibited roundish PDMS$_{60}$ domains similar to the morphology of the active ester-based conetworks. In addition, the phase morphologies were imaged on the surface of the synthesized polymer showing similar morphologies to bulk (Figure 4b).
FT-IR: u= 2962, 1732, 1685, 1592, 1521, 1450, 1412, 1355, 1258, 1169, 1083, 1064, 1011, 863, 792, 687, 661 (cm-1) Elemental analysis (unit: mass-%) of PNP4A-I-PDMS C 41.3, H 7.4, N 3.5

Example 3: Step c): synthesis of MSMC: polvfN-(pyridine-4-vl)1 acrylamide]$_6$ complexed to Zn(II) cation)] linked by poly(dimethylsiloxane)$_{60}$- $\alpha,\omega$ propyl methacrylate (PNP4A-Zn(II)-I-PDMS$_{60}$)

A PNP4A-I-PDMS$_{60}$ polymer conetwork film (5 $\times$ 1 cm$^2$)-was immersed in 30 mL of THF into which ZnCl$_2$ had been previously dissolved concentration of which is 0,038 M/L ZnCl$_2$. The solution was heated to 60 °C overnight. The film was then rinsed in THF, and dried overnight under vacuum. The concentration of Zn(II) in the material was determined by Inductively Coupled Plasma Mass Spectrometry (ICP-MS) analysis to be 4,5 $\pm$ 0,1 wt. %. This content corresponds to a molar ratio of PNP4A to Zn(ll) close to 2:1. AFM revealed spherical interconnected PDMS$_{60}$ domains in a PNP4A-Zn(II) phase (Figure 4c). The PDMS$_{60}$ domains are bigger, and the hydrophilic domains appear thinner than the domains of the metal-free APCN. Thus, the incorporation of metal ions does not change the overall phase morphology of (PNP4A-Zn(II)-I-PDMS$_{60}$, but increases the size of hydrophobic domains, while it decreases the size of the hydrophilic domains due to the cross-linking of the PNP4A phase.

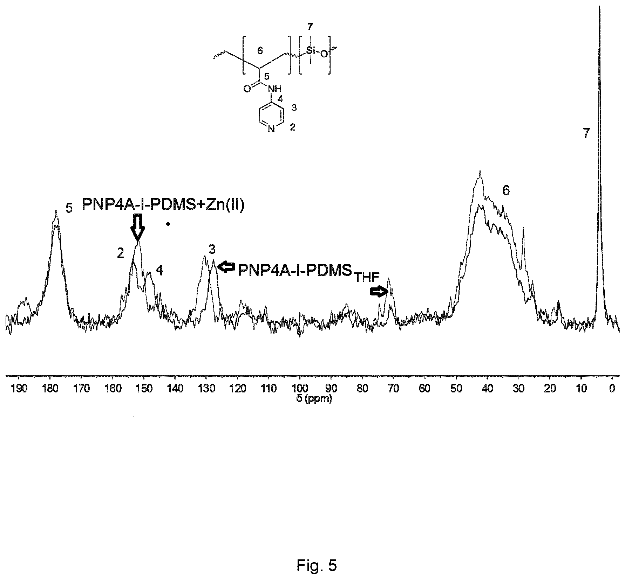

The complexation of Zn(!!) ions by poly(N-(pyridin-4-yl)acrylamide) ligands was confirmed by solid-state NMR analysis. As shown in Figure 5, the characteristic peaks of pyridine were shifted at 154 ppm CH(2), 148 ppm CH(4) and 128 ppm CH(3) for the PNP4A-I-PDMS$_{60}$ conetwork, while for the polymer conetwork loaded with Zn(II) only two signals shifted at 152 CH (2 and 4) ppm and 130 ppm CH(3) were observed. As the pyridine carbon signals are the most impacted by the coordination bond between the aromatic nitrogen and Zn(II), one my conclude that Zn(II) ions are complexed solely by poly(N-(pyridin-4-yl)acrylamide) ligands. FT-IR: u= 2962, 1732, 1684, 1615, 1521, 1450, 1412, 1355, 1258, 1169, 1083, 1064, 1011, 863, 792, 687, 661 (cm-1).

Example 4: Self-healing properties of MSMC compound of Example 3

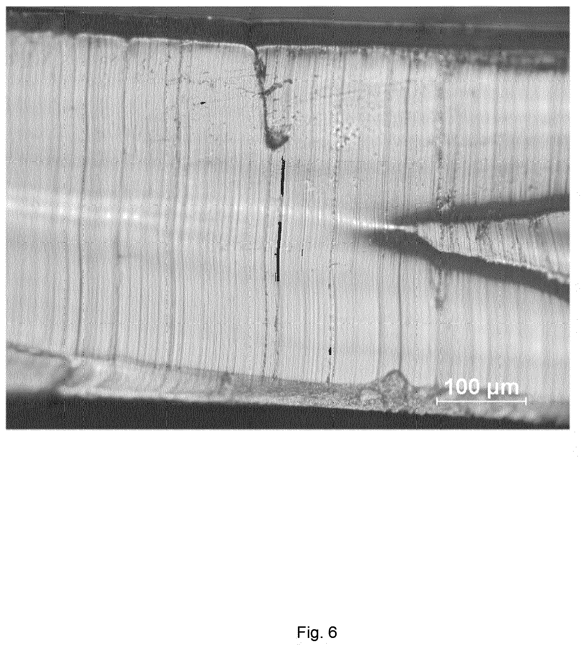

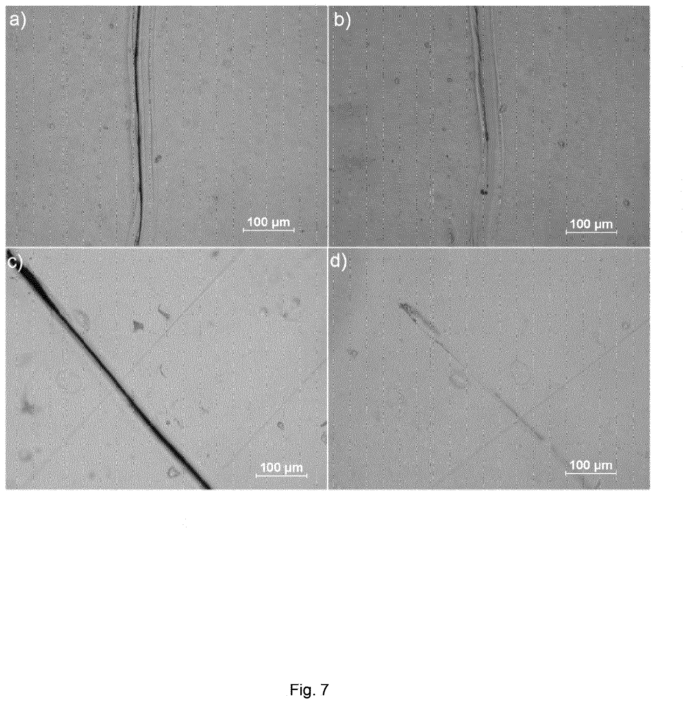

To demonstrate the self-healing ability of the MSMC of Example 3, the surface of sample was scratched using a scalpel leading to 10 $\pm$ 3 $\mu$m scratch width and approximately 100 $\mu$m deep, representing approximately 25% of the polymer film thickness (Figure 6). Then, the sample was placed in an oven and heated to 80°C for 16 hours. Healing of the scratch was monitored by optical microscopy (Figure 7). Under these conditions, the scratch closed but did not heal completely. However, when the temperature was increased to 120°C, the healing effect improved. The entire scratch healed, even though one could still observe a scar at the scratched area.

Example 5: Self-healing properties of MSMC compound of Example 3 with regard to mechanical properties

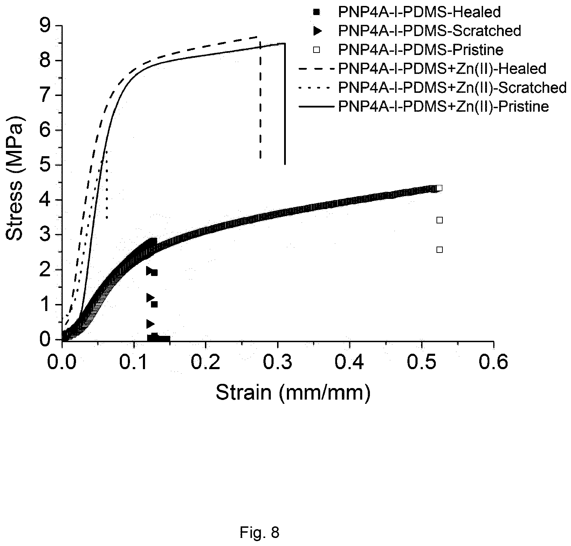

Another possibility to assess the self-healing of materials is to measure the recovery of their mechanical properties after damage and healing. To this end, tensile tests of polymer films were carried out (Figure 8). A Young Modulus (E') of 132 $\pm$ 30 MPa with a tensile strength of 7,4 $\pm$ 1,3 MPa and a strain at break of 0,31 $\pm$ 0.04 were measured at a strain rate of 10 mm min-1 for PNP4A-I-PDMS$_{60}$ loaded/complexed with ZnCl$_2$. For comparison, the PNP4A-I-PDMS without Zn(II) exhibited a lower E' of 25 $\pm$ 5 MPa and a higher strain at break of 0,5, but a lower tensile strength (4,5 $\pm$ 0.5 MPa). Thus, non-covalent cross-linking of the polymer conetwork by Zn(ll) made it stiffer and strengthened it. Applying a scratch along the entire width of the strip and oriented perpendicular to the uniaxial deformation on the surface of PNP4A-I-PDMS$_{60}$ films loaded with ZnCl$_2$ reduced their mechanical properties. Polymer films broke into two parts at strain of only 0,07 $\pm$ 0,02 (Figure 8). Heating of scratched samples to 120°C for 16 hours led to a strain at break of 0,25 $\pm$ 0,03 i.e. self-heling of the scratches resulted in 80 $\pm$ 8 % recovery of strain at break. It should be noted that the polymers are covalently cross-linked in addition to the non-covalent crosslinks by the Zn(II) complexes. To demonstrate that the healing of the scratches is due to the reformation of non-covalent supramolecular crosslinks, scratches were applied on the surface of the polymer conetwork PNP4A-I-PDMS$_{60}$ films that do not contain Zn(II). Tensile tests analysis revealed that heating the damaged sample at 120°C for 16 hours did not improve the strain unlike the film loaded with Zn(II) as shown in Figure 8 (dotted lines).

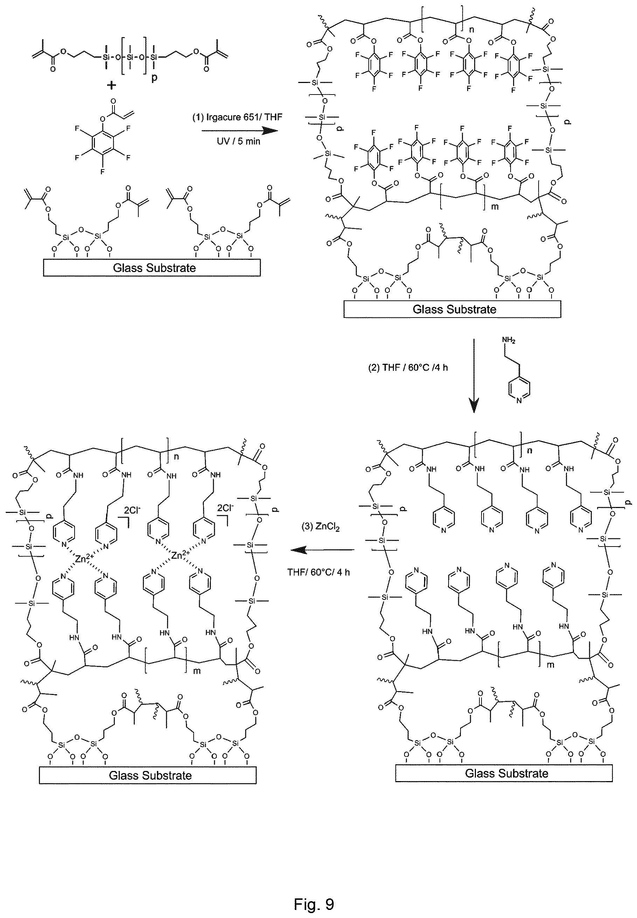

Additional examples relate the synthesis of PNP4EA-I-PDMS polymer conetworks loaded with ZnCl$_2$ grafted of a glass substrate, in reference to Figure 9. The steps of preparing the MSMC of the invention grafted on said substrate essentially include same steps as of examples 1-3.

Example 6: steps 1-2)): Synthesis of derivatives of poly[(pentafluorophenyl)acrylate]$_{10}$ moiety linked by poly(dimethylsiloxane)$_{130}$ $\alpha,\omega$-propylmethacrylate moiety (PPFPA-I-PDMS$_{130}$)

Glass slides (2.6 $\times$ 3 cm$^2$) were immersed into Piranha solution (concentrated H$_2$SO$_4$/30% H$_2$O$_2$, 3:2, v:v) for 30 min, rinsed with water and ethanol, and dried in the oven at 55°C for 15 min. The glass slides were then transferred in 5 mL solution of dry toluene containing 20 vol% concentration of 3-(trimethoxysilyl)propylmethacrylate. The reaction took place in a tightly closed screw cap bottle for 16 hours at room temperature. The glass slide was washed with toluene and ethanol and dried under vacuum.

The preparation of the glass-coated polymer consisted in preparing a mixture containing 55 %wt of pentafluorophenyl acrylate (PFPA) and 45wt% of $\alpha,\omega$-propyloxymethacrylate-terminated poly(dimethylsiloxane)$_{130}$, further diluted with 10 wt% of THF into which the initiator Irgacure 651 had been dissolved at 0,5 wt%. 100 $\mu$L of the solution was casted onto the functionalized glass substrate. A glass slide covered with a PP TESA tape was placed on top of the monomer solution and tightly sealed using the binder clips (not shown). The coating was irradiated under UV light for 2,5 min from each side of the glass slide. After removing the top slide, the coated glass slide was placed in THF overnight at room temperature to extract unreacted monomers. ATR-FTIR: u= 2963, 1785, 1519, 1259, 1078, 993, 863, 788, 702 (cm$^{-1}$).

Example 7: step 3): Synthesis of derivatives of poly[2-ethyl-N-(pyridin-4-yl)]acrylamide]$_{10}$ linked by poly(dimethylsiloxane)$_{130}$- $\alpha,\omega$ propyl methacrylate (PNP4EA-I-PDMS$_{130}$) covalently attached to a glass substrate.

The PPFPA-I-PDMS$_{130}$ coating covalently attached onto the glass slide (2.6 $\times$ 3 cm$^2$) was immersed in 10 mL of THF containing 4-(2-ethylamino)pyridine (0,010 g, 0,082 mmol). The screw cap bottle (50 mL) was placed in an oven heated at 60°C for 4 hours. After the reaction, the coating was transferred into THF and heated at 60°C for 2 hours to extract the residue of pentafluorophenol. The coating was then dried under vacuum before analysis. ATR-FTIR: u= 3260, 3049, 2962, 1658, 1604, 1556, 1443, 1416, 1400, 1084, 1005, 865, 788, 701 (cm$^{-1}$).

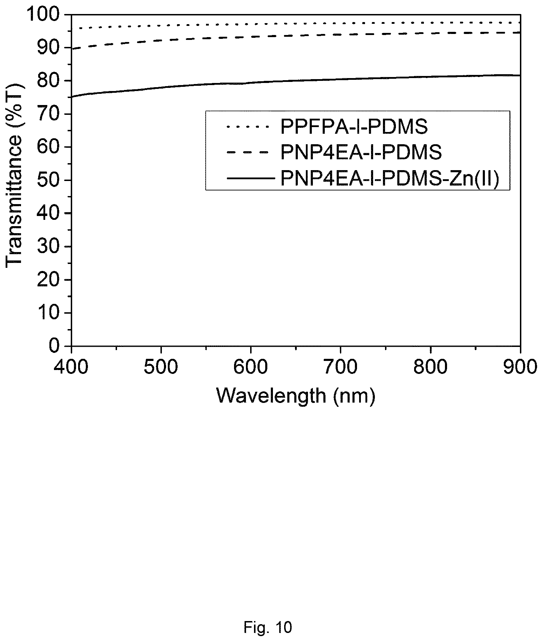

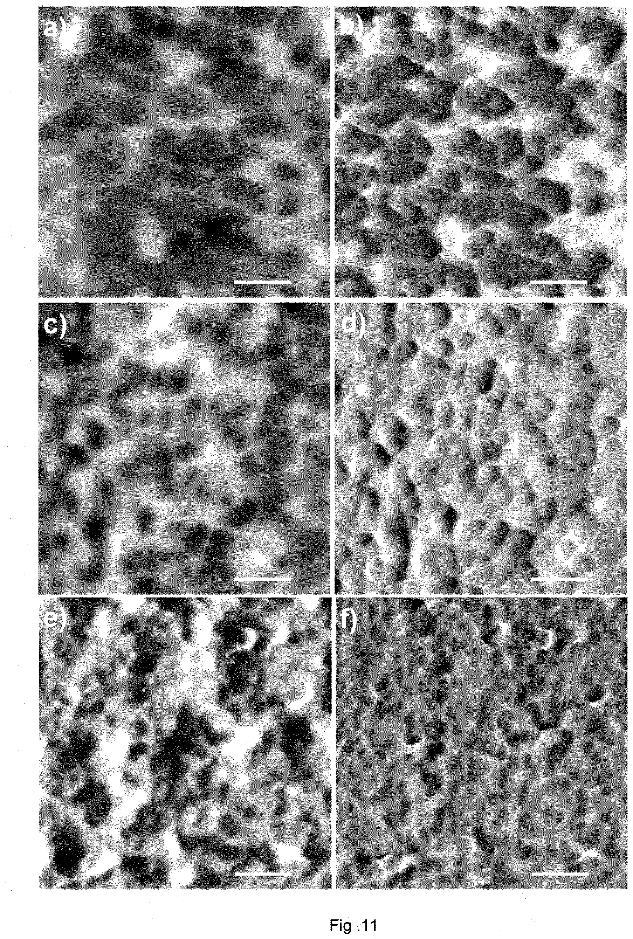

According to the FTIR spectrum analysis, the peak assigned to the active ester disappeared after the reaction and was replaced by the amide stretch signal at 1658 cm$^{-1}$ and the pyridine ring vibration signal at 1604 cm$^{-1}$ (Figure 10). The transmittance of the polymer coating following the functionalization of pyridine ligand was measured and reached 90% (Figure 2), indicating that the nanostructured morphologies remained unaltered, that was confirmed by AFM analysis (Figure 11). The expected contrast between hard and soft phases, arising from their difference in energy dissipation, was evidenced. The bulk morphology of the PPFPA-I-PDMS$_{130}$ conetworks revealed phase-separated morphologies with interconnected spherical PDMS$_{130}$ domains (ca. 25 nm in diameter) that are homogenously dispersed in the PPFPA matrix (Figure 11 a-b). The PNP4EA-I-PDMS conetworks exhibited roundish PDMS$_{130}$ domains of 28 nm $\pm$ 2 nm in diameter with the same morphology of the active ester-based conetworks (Figure 11 c-d). To determine the thickness of the polymer coating, the surface of the coating was scratched using a scalpel, and the scratched area was analysed by AFM, with a thickness of approximately 5 $\mu$m.

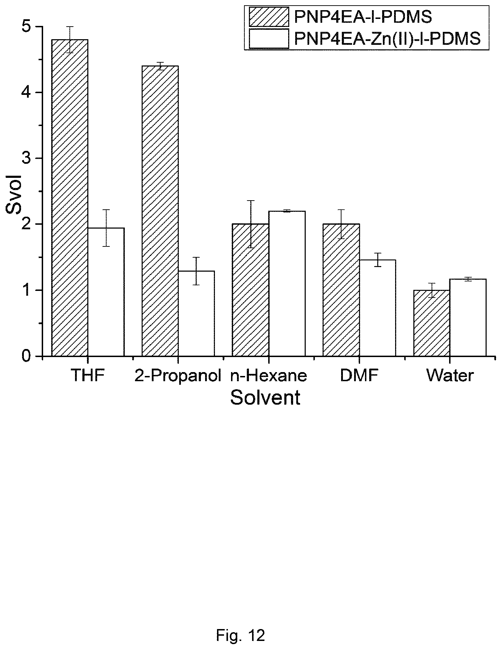

The PNP4EA-I-PDMS$_{130}$ polymer conetworks films were immersed in THF, a good solvent of the PNP4EA and PDMS$_{130}$ phases. An average volumetric degree of swelling (SVol) of 4,84 $\pm$ 0,24 revealed a good swelling ability of the polymer conetwork in THF (Figure 12). The films were immersed in 2-propanol, a selective solvent of PNP4EA phase with an average volumetric degree swelling of 4,4 $\pm$ 0,06, in the same range as the one measured in THF. Immersing the film in n-hexane, a selective solvent of PDMS, resulted in much lower swelling (Svol = 2,01 $\pm$ 0,36), because the PNP4EA phase did not swell. Similarly, a lower swelling ability of Svol = 2,03 $\pm$ 0,21 was determined in dimethylformamide (DMF), a selective solvent of the PNP4EA phase. In contrast, when the films were immersed in water, they revealed a poor swelling ability with an Svol of only 1,03 $\pm$ 0,11. Most likely, hydrophobic interactions between N-heterocyclic aromatic groups hindered the swelling of the polyacrylamide phase in water.

Example 8: step 4): complexation of derivatives of Example 7 by ZnCl2: obtention of PNP4EA-ZnCl$_2$-I-PDMS$_{130}$ bound to the functionalized glass substrate

The glass coated polymer (2,6 $\times$ 3 cm$^2$ and 5 $\mu$m thick) conetwork of Example 7 was immersed in THF (10 mL) containing 0,5 10$^{-3}$ g/mL of ZnCl$_2$, and the solution was heated at 60°C for 4 hours. The film was then rinsed in THF, and dried under vacuum overnight. The concentration of Zn(ll) corresponding to 8,5 ± 0,1 wt% was determined by Inductively Coupled Plasma Mass Spectrometry (ICP-MS) by detaching the coating from the glass slide.

The loading of metal complexes resulted in a slight decrease of transmittance from 90 to 80% in the visible range, and was assigned to the absorption of the PNP4EA-Zn(II) complexes embedded in the bulk of the coating (Figure 10). AFM surface analysis revealed spherical interconnected $PDMS_{130}$ domains in a PNP4EA-Zn(II) phase (Figure 11 e-f). The $PDMS_{130}$ domains are smaller, and the hydrophilic domains appear larger than the domains without Zn(II). Thus, the complexation of compound of Example 7 by Zn(!!) into the $PNP4EA-ZnCl_2-I-PDMS_{130}$ decreased the size of hydrophobic domains (ca. 15 nm in diameter) due to the cross-linking of the PNP4EA phases by Zn(II).

The loading of $ZnCl_2$ into the polymer conetwork film (Example 7) reduced the swelling ability of the polymer conetwork due to the cross-links formed by the metal complexes within the PNP4EA phase. The average volumetric degree of swelling decreased down to 1,94 ± 0,28 and 1,29 ± 0,21 for THF and 2-propanol, respectively. The difference in swelling was assigned to a higher solubility of $PDMS_{130}$ in THF than 2-propanol. When the polymer conetwork film was immersed in n-hexane, the swelling ability of the film was not affected (SVol = 2,20 ± 0,01) because n-hexane does not expand the PNP4EA phase in which the PNP4EA-Zn(II) complexes are localized. In DMF, the $S_{Vol}$ of 1,46 ± 0,1 was determined. The slight decrease of the swelling property compared to THF and 2-propanol arises from the fact that DMF is a selective solvent for the PNP4EA phase and a good ligand for metal ions. Therefore, loading Zn(ll) ions slightly reduced the swelling property. In water, no improvement in the swelling ability was observed since the interactions between N-heterocyclic aromatic groups prevail over ionic interactions in water.

Example 9: Scratch-healing properties of PNP4EA-$ZnCl_2$-I-$PDMS_{130}$ covalently attached to the glass substrate

The impact of the zinc cation on the surface property of the coating was assessed by AFM analysis. The loading of zinc cations into the polymer conetwork coating of Example 7 strengthened the network and thus improved the overall mechanical property of the coating. To highlight this effect, AFM analysis was performed using the friction force microscope (FFM) to determine the lateral forces that are acting between the AFM tip and the surface to be analysed. The elastic modulus of the $PNP4EA-I-PDMS_{130}$ surface was determined according to the Oliver-Pharr model and by using a copolymer based on polystyrene and low-density polyethylene (LDPE) as the reference for the calibration. The elastic modulus of the surface of the polymer coating was estimated at 14,01 ± 0,6 MPa and the loading of Zn(!!) ions strengthened the polymer conetwork by improving the elastic modulus to 26,27 ± 2,00 MPa.

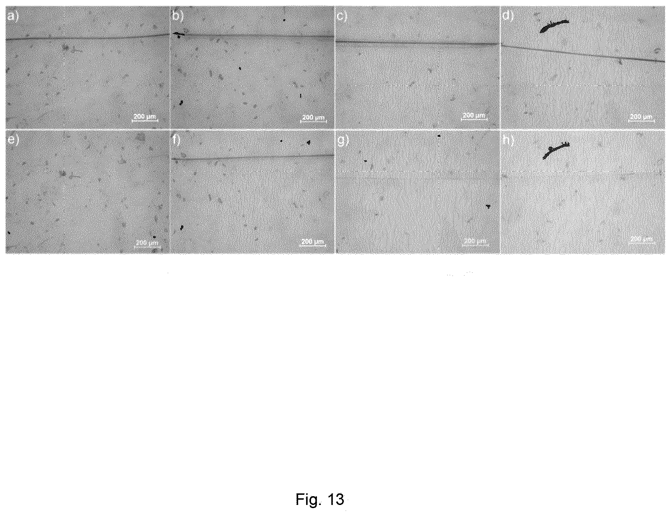

The scratch-healing property of the synthesized glass-coated polymers was tested on a polymer conetwork of PNP4EA-Zn(II)-I-$PDMS_{130}$, The surface of the sample was scratched using a scalpel to form a 15 μm scratch width, and the scratch-healing property was verified by the optical microscope (Figure 13 a-d). The extent of the scratch healing was tested by placing the scratched polymer coating in an oven heated to 80°C. No healing effect was observed at 80°C even after 24 hours, due to the densely cross-linked polymer network that inhibited the mobility of the polymer chains needed for the healing ability. Therefore, the swelling property of the MSMC in organic solvent was exploited to improve the self-healing property. THF was tested as a non-selective solvent of the two phases, by dropping the solvent onto the scratched surface of the coating. The glass-coated polymer was then placed in an oven heated to 65°C for two hours. Optical microscope images evidenced the healing effect, even though one could still observe a scar on the scratched area. (Figure 13-e). On the other hand, no healing was observed for n-hexane solvent due to the collapse of the PNP4EA phase, which inhibited the healing property of the scratch. (Figure 13-f) Therefore a selective solvent is used in the PNP4EA phases in order to improve the swelling of the supramolecularly cross-linked phases. 2-propanol and DMF, which are the selective solvents for the PNP4EA phases, were tested. To this end, 2-propanol was dropped on to the damaged surface before the coating was placed in an oven heated to 80°C and optical microscopy images evidenced the healing of the scratch (Figure 13-g). DMF was also tested and because of its higher boiling point, the healing temperature was set to 150°C to avoid any remaining solvent in the polymer film after healing. Optical images confirmed the successful scratch-healing of the coating induced by the swelling effect of DMF. (Figure 13-h) Despite the lower volumetric degree of swelling of the overall polymer conetwork film in DMF and 2-propanol measured at room temperature, the ability to selectively swell the PNP4EA phase at higher temperature enables the healing effect.

According to the invention transparent scratch-healing coating from metallo-supramolecular polymer conetworks is successfully prepared. The combination of their swelling property in organic solvent with the reversible interactions of metal complexes offers a self-healing coating with a robust mechanical property. These materials could be used for a protective coating, taking into account that the metal complexes embedded in the polymer matrix (MSMC) can widen the scope of the application towards conductive coatings, catalytic active surfaces or even for antifouling surfaces via the release of metal ions.

Example 10: Bacterial anti-adhesion behavior of compound obtained in Example 3: PNP4A-ZnCl$_2$-I-PDMS$_{60}$ bound to the functionalized glass substrate

The functionalized glass substrate with PNP4A-ZnCl$_2$-I-PDMS$_{60}$ (which was prepared using the protocol of Examples 1-3 with 50 wt% of PFPA and 50 wt% PDMS$_{60}$) of was sterilized in an autoclave at about 105°, which was validated by a preliminary test.

Each glass surface which was glued in a Petri dish of 35 mm owing to a glue (Aqua Silicone; Den Braven, The Netherlands.

Experiments were carried out with *Escherichia coli SCC1* (E.coli) in a culture medium containing NaCl (9 g/L). Frozen Bacteria (-80°C) were cultured at D-2 (2 days before experiments) on agar Luria Broth (LB) for obtaining bacteria colonies. At D-1, a solution of a LB nutrient medium was inoculated by a *E. Coli* colony and further incubated at 30°C during 18h. At D-0, a new bacteria culture was prepared with 10% of the pre-culture and incubated 4h at 30°C. This culture was centrifuged at 3500 rpm during 20 min, the bacteria sediment was suspended in NaCl (9 g/L) to obtain an optical density (OD) of 0,01 at 600 nm.

Glass surfaces with PNP4A-ZnCl$_2$-I-PDMS$_{60}$ were incubated in 4 mL of the bacteria solution as previously prepared during 1h at 30°C, then washed 8 times in NaCl (9 g/L) before microscope analysis with straight confocal microscope (LSM800- Zeiss).On each surface, 10 random areas were imaged and analyzed with a FiJi software for image treatment. On each area, the number of bacteria was determined.

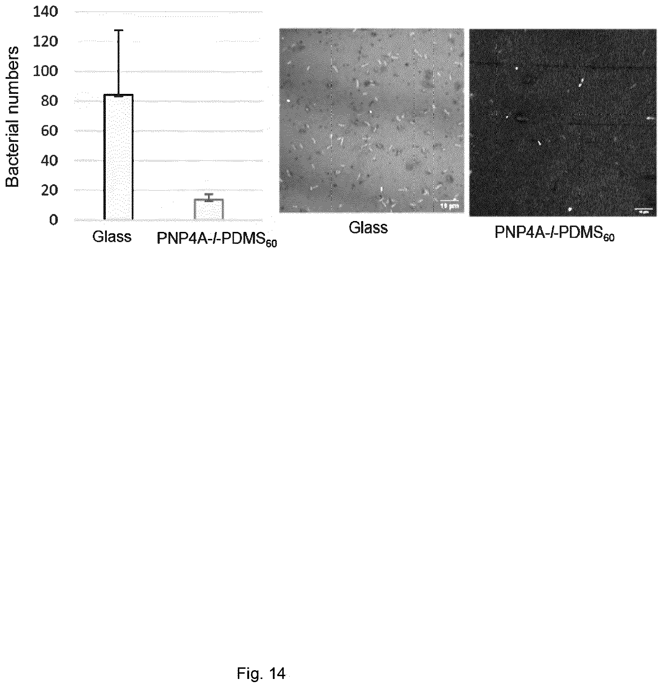

Results are depicted in Fig.14. The results show that the coated glass inhibits the proliferation of bacteria of the coated surface.

**Claims**

1. Metallo supramolecular polymer conetworks (MSMC) of poly[r(alkyl)$_a$-N-(pyridin-s-yl) (meth)-acrylamide moiety]$_{m,n}$ derivatives-complexed to a transition metal cation-linked by poly(dimethylsiloxane)$_p$alkyl-(meth)-acrylate moiety derivatives, wherein a is 0 or 1 or 2, p is an integer selected from the group consisting of from 50 to 70 and of from 120 to 180, r is integer of from 0 to 4, and s is an integer of from 2 to 4, and m and n, independently, are integers of from 5 to 11.

2. Metallo supramolecular polymer conetworks according to claim 1, wherein the (meth)-acrylate moiety derivatives are acrylate and/or methacrylate derivatives, and wherein the transition metal cation is selected form the group consisting of Zinc and Mn cations, preferentially zinc cation.

3. Metallo supramolecular polymer conetworks according to claim 1 or 2, wherein the alkyl groups are at least one selected from the group consisting of methyl, ethyl, propyl and butyl, or mixture thereof and wherein the inorganic anion is chloride or nitrate thereof.

4. Metallo supramolecular polymer conetworks according to any one of claims 1-3, wherein p is selected from the group consisting of from 60 to 70 and of from 130 to 170, of from 65 to 70 and of from 145 to 160, and wherein s is 4.

5. A process of preparing the metallo supramolecular polymer conetworks (MSMC) of any of claims 1-4, comprising the following steps of:

   a) providing a reaction medium comprising a mixture of (alkyloxy)-(meth)-acrylate moiety derivatives-poly(dimethylsiloxane)$_p$ type compounds wherein p is an integer selected from the group consisting of from 50 to 70 and of from 120 to 180 and an active ester of pentafluorophenyl-(meth)acrylate moiety, and performing an UV-initiated polymerization using a photoinitiator, for the obtention of poly[(pentafluorophenyl-(meth)-acrylate moiety]$_{m,n}$ derivatives linked by poly(dimethylsiloxane)$_p$alkyl-(meth)-acrylate moiety derivatives, wherein "m", "n" and "p" are as defined in claim 1;
   b) reacting the product obtained in step a) with an r-amino(alkyl)$_a$-N-s(pyridine) for obtaining poly[r-(alkyl)$_a$-N-(pyridin-s-yl) (meth)-acrylamide moiety]$_{m,n}$ derivatives linked by poly(dimethylsiloxane)$_p$alkyl-(meth)-acrylate moiety derivatives, wherein "m", "n", p", "r", "s" and "a" are as defined in claim 1;
   c) complexation of the derivatives obtained in step b) by a transition metal cation in an organic solvent.

6. The process according to claim 5, wherein the (alkyloxy)-(meth)-acrylate moiety derivatives-poly(dimethylsiloxane)$_p$ type compounds of step a), are exhibiting viscosity of 50 to 90 cSt, having a Mn of 4000 to 5000, or 125 to 250 cSt, having a Mn of 8000 to 11000.

7. The process according to claim 5 or 6, wherein the UV-initiated polymerization of step a) is carried out of from 2 to 5 min, wherein the amount of the active ester in the mixture is of from 45 wt% to 60 wt%, the amount of the poly(dimethylsiloxane)$_p$ moieties in the mixture is of from 40 wt% to 55% wt%, the amount of an organic solvent, is of from 5 to 10 wt%.

8. The process according to any of claims claim 5-7, wherein the amount range of the r-amino(alkyl)a-N-s(pyridine) compound in the reaction medium of step b) is advantageously of from 1,5 molar eq. to 2,6 molar eq. based on the poly[(pentafluorylphenyl-(meth)acrylate moiety]$_{m,n}$ derivatives linked by poly(dimethylsiloxane)$_p$alkyl-(meth)acrylate moiety derivatives molar content, and the amount of transition metal salt is in the range of from 0,03 M/L to 0,05 M/L.

9. A film comprising the MSMC of any of claims 1-4 or as obtainable by the process of any of claims 5-8.

10. A material comprising a coated film onto a substrate, said film is as defined in claim 9.

11. A process for preparing a material coated on a substrate, according to claim 10, comprising the following of step of:

1) grafting s(trialkyloxy-silyl)alkyl(meth)-acrylate derivatives onto the substrate,
2) providing a reaction medium comprising a mixture of (alkyloxy)-(meth)-acrylate moiety derivatives-poly(dimethylsiloxane)$_p$ type compounds wherein p is an integer selected from the group consisting of from 50 to 70 and of from 120 to 180, and an active ester comprising a pentafluorophenyl-(meth)-acrylate moiety and a photoinitiator, contacting said mixture with the functionalized substrate of step 1), performing an UV-initiated polymerization, for the obtention poly[(pentafluorophenyl-(meth)-acrylate moiety]$_{m,n}$ derivatives linked by poly(dimethylsiloxane)$_p$alkyl-(meth)-acrylate moiety derivatives bound to the functionalized substrate, wherein "m", "n" and "p" are as defined in claim 1;
3) reacting the poly[(pentafluorophenyl-(meth)-acrylate moiety]$_{m,n}$ linked by poly(dimethylsiloxane)$_p$alkyl-(meth)-acrylate moiety derivatives which are bound to the functionalized substrate, with an r-amino(alkyl)a-N-s(pyridine) for obtaining poly[r-(alkyl)$_a$-N-(pyridin-s-yl) (meth)-acrylamide moiety]$_{m,n}$ derivatives linked by poly(dimethylsiloxane)$_p$alkyl-(meth)-acrylate moiety derivatives, bound to the functionalized substrate, wherein "m", "n", p", "r", "s" and "a" are as defined in claim 1;
4) complexation of the derivatives obtained in step 3), which are bound to the functionalized substrate, by a transition metal cation in an organic solvent.

12. Process according to claim 11, wherein, in the step 1), the alkyl groups in s(trialkyloxy-silyl)alkyl(meth)-acrylate derivatives are selected from the group consisting of methyl, ethyl, propyl, butyl or mixtures thereof.

13. Process according to claim 11 or 12, wherein concentrations of s(trialkyloxy-silyl) alkyl(meth)acrylate derivatives of the step 1) in an organic solvent are comprised in a range of values of from 10 vol% to 30 vol%.

14. Process according to claim 13, wherein the s(trialkyloxy-silyl)alkyl(meth)acrylate derivatives are selected from the group consisting of 1-(trimethoxysilyl)methylacrylate, 2-(trimethoxysilyl)ethylacrylate, 3-(trimethoxysilyl)propylacrylate, 1-(trimethoxysilyl)methylmethacrylate, 2-(trimethoxysilyl)ethylmethacrylate, 3-(trimethoxysilyl)propylmethacrylate 1-(triethoxysilyl)methylacrylate, 2-(triethoxysilyl)ethylacrylate, 3-(triethoxysilyl)propylacrylate, 1-(triethoxysilyl)methylmethacrylate, 2-(triethoxysilyl)ethylmethacrylate, 3-(triethoxysilyl)propylmethacrylate, or a mixture thereof.

15. Use of the MSMC of any of claims 1-4 or as obtainable by the process of any of claims 5-8 or any of claims 11 to 14 as a bacterial anti-adhesion agent

**Patentansprüche**

1. Metallo-supramolekulare Polymernetzwerke (MSMC) aus Poly[r(alkyl)$_a$-N-(pyridin-s-yl)(meth)-acrylamid-Anteil]$_{m,n}$-Derivaten, die mit einem Übergangsmetallkation verbunden sind, verknüpft durch Poly(dimethylsiloxan)$_p$alkyl-(meth)-acrylat-Anteil-Derivate, worin a 0 oder 1 oder 2 ist, p eine ganze Zahl ist, ausgewählt aus der Gruppe bestehend aus 50 bis 70 und 120 bis 180, r eine ganze Zahl von 0 bis 4 ist und s eine ganze Zahl von 2 bis 4 ist und m und n unabhängig voneinander ganze Zahlen von 5 bis 11 sind.

2. Metallo-supramolekulare Polymernetzwerke nach Anspruch 1, wobei die (Meth)-acrylat-Derivate Acrylat- und/oder Methacrylat-Derivate sind, und wobei das Übergangsmetallkation ausgewählt ist aus der Gruppe bestehend aus Zink- und Mn-Kationen, vorzugsweise Zinkkation.

3. Metallo-supramolekulare Polymernetzwerke nach Anspruch 1 oder 2, wobei die Alkylgruppen mindestens eine sind, ausgewählt aus der Gruppe, bestehend aus Methyl, Ethyl, Propyl und Butyl oder einer Mischung davon besteht und wobei das anorganische Anion Chlorid oder Nitrat ist.

4. Metallo-supramolekulare Polymernetzwerke nach einem der Ansprüche 1-3, worin p ausgewählt ist aus der Gruppe bestehend aus 60 bis 70 und 130 bis 170, aus von 65 bis 70 und von 145 bis 160, und wobei s 4 ist.

5. Ein Verfahren zur Herstellung der metallo- supramolekularen Polymernetzwerke (MSMC) nach einem der Ansprüche 1-4, umfassend die folgenden Schritte:

a) Bereitstellen eines Reaktionsmediums, das ein Gemisch aus (Alkyloxy)-(meth)-acrylat-Anteil-Derivaten-Poly(dimethylsiloxan)-Verbindungen, worin p eine ganze Zahl ist, die aus der Gruppe ausgewählt ist, die aus 50 bis 70 und 120 bis 180 besteht, und einem aktiven Ester des Pentafluorphenyl-(meth)acrylat-Anteils umfasst, und Durchführen einer UV-initiierten Polymerisation unter Verwendung eines Photoinitiators zur Herstellung von Poly[(pentafluorphenyl-(meth)-acrylat-Anteil$_{m,n}$-Derivaten, die durch Poly(dimethylsiloxan)$_p$alkyl-(meth)-acrylat-Anteil-Derivate verknüpft sind, wobei "m", "n" und "p" wie in Anspruch 1 definiert sind,
b) Umsetzen des in Schritt a) erhaltenen Produkts mit einem r-Amino(alkyl),-N-s(pyridin), um Poly[r-(alkyl),-N-(pyridin-s-yl)(meth)-acrylamid-Anteil]-Derivate zu erhalten, die durch Poly(dimethylsiloxan)alkyl-(meth)-acrylat-Anteil-Derivate verknüpft sind, wobei "m", "n", p", "r", "s" und "a" wie in Anspruch 1 definiert sind;
c) Komplexierung der in Schritt b) erhaltenen Derivate mit einem Übergangsmetallkation in einem organischen Lösungsmittel.

6. Das Verfahren nach Anspruch 5, wobei die Verbindungen vom Typ (Alkyloxy)-(meth)-acrylat-Derivate-Poly(dimethylsiloxan) aus Schritt a) eine Viskosität von 50 bis 90 cSt mit einem Mn von 4000 bis 5000 oder 125 bis 250 cSt mit einem Mn von 8000 bis 11000 aufweisen.

7. Das Verfahren nach Anspruch 5 oder 6, wobei die UV-initiierte Polymerisation von Schritt a) 2 bis 5 Minuten lang durchgeführt wird, wobei die Menge des aktiven Esters in der Mischung 45 bis 60 Gew.-% beträgt, die Menge der Poly(dimethylsiloxan)p-Anteile in der Mischung 40 bis 55 Gew.-% beträgt und die Menge eines organischen Lösungsmittels 5 bis 10 Gew.-% beträgt.

8. Das Verfahren nach einem der Ansprüche 5-7, wobei der Mengenbereich der r-Amino(alkyl)a-N-s(pyridin)-Verbindung in dem Reaktionsmedium von Schritt b) vorteilhafterweise von 1,5 molaren Äquivalenten bis 2,6 molaren Äquivalenten beträgt, bezogen auf den molaren Gehalt an Poly[(pentafluorylphenyl-(meth)acrylat-Anteil]$_{m,n}$ Derivaten, die durch Poly(dimethylsiloxan), Alkyl-(meth)acrylat-Anteil-Derivate verbunden sind, und die Menge an Übergangsmetallsalz im Bereich von 0,03 M/L bis 0,05 M/L liegt.

9. Eine Folie umfassend die MSMC nach einem der Ansprüche 1-4 enthält oder, die nach dem Verfahren nach einem der Ansprüche 5-8 hergestellt werden können.

10. Ein Material, umfassend eine beschichtete Folie auf einem Substrat, wobei die Folie wie in Anspruch 9 definiert ist.

11. Ein Verfahren zur Herstellung eines auf ein Substrat beschichteten Materials nach Anspruch 10, das den folgenden Schritt umfasst:

1) Pfropfen von s(Trialkyloxy-Silyl)-Alkyl(meth)-acrylat-Derivaten auf das Substrat,
2) Bereitstellen eines Reaktionsmediums, das ein Gemisch aus Verbindungen vom Typ (Alkyloxy)-(meth)-acrylat-Derivate-Poly(dimethylsiloxan)p, worin p eine ganze Zahl ist, die aus der Gruppe ausgewählt ist, die aus 50 bis 70 und 120 bis 180 besteht, und einen aktiven Ester umfasst, der einen Pentafluorphenyl-(meth)-acrylat-Anteil und einen Photoinitiator umfasst, Zusammenbringen der Mischung mit dem funktionalisierten Substrat aus Schritt 1), Durchführen einer UV-initiierten Polymerisation, um Poly[(pentafluorphenyl-(meth)-acrylat-Anteil]$_{m,n}$-Derivate zu erhalten, die durch Poly(dimethylsiloxan)$_p$alkyl-(meth)-acrylat-Anteil-Derivate, die an das funktionalisierte Substrat gebunden sind, verknüpft sind, wobei "m", "n" und "p" wie in Anspruch 1 definiert sind;
3) Umsetzen der über Poly(dimethylsiloxan) gebundenen Poly[(pentafluorphenyl-(meth)-acrylat-Anteill$_{m,n}$, Alkyl-(meth)-acrylat-Anteil-Derivate, die an das funktionalisierte Substrat gebunden sind, mit einem r-Amino(alkyl)a-N-s(pyridin), um Poly[r-(alkyl)-N-(pyridin-s-yl)(meth)-acrylamid-Anteil]m,n, Derivate, die durch Poly(dimethylsiloxan)$_p$alkyl-(meth)-acrylat-Teil-Derivate verbunden sind, gebunden an das funktionalisierte Substrat, wobei "m", "n", p", "r', "s" und "a" wie in Anspruch 1 definiert sind;
4) Komplexierung der in Schritt 3) erhaltenen Derivate, die an das funktionalisierte Substrat gebunden sind, mit einem Übergangsmetallkation in einem organischen Lösungsmittel.

12. Verfahren nach Anspruch 11, wobei in Schritt 1) die Alkylgruppen in s(Trialkyloxysilyl)alkyl(meth)acrylat-Derivaten ausgewählt sind aus der Gruppe bestehend aus Methyl, Ethyl, Propyl, Butyl oder Mischungen davon.

13. Verfahren nach Anspruch 11 oder 12, wobei die Konzentrationen der s(Trialkyloxy-Silyl)-Alkyl(meth)acrylat-Derivate aus Schritt 1) in einem organischen Lösungsmittel in einem Wertebereich von 10 Vol% bis 30 Vol% enthalten sind.

14. Verfahren nach Anspruch 13, wobei die s(Trialkyloxy-silyl)alkyl(meth)acrylat-Derivate ausgewählt sind aus der Gruppe bestehend aus 1-(Trimethoxysilyl)methylacrylat, 2-(Trimethoxysilyl)ethylacrylat, 3-(Trimethoxysilyl)propylacrylat, 1-(Trimethoxysilyl)methylmethacrylat, 2-(Trimethoxysilyl)ethylmethacrylat, 3-(Trimethoxysilyl)propylmethacrylat 1-(Triethoxysilyl)methylacrylat, 2-(Triethoxysilyl)ethylacrylat, 3-(Triethoxysilyl)propylacrylat, 1-(Triethoxysilyl)methylmethacrylat, 2-(Triethoxysilyl)ethylmethacrylat, 3-(Triethoxysilyl)propylmethacrylat oder eine Mischung davon.

15. Verwendung der MSMC nach einem der Ansprüche 1-4 oder erhältlich durch das Verfahren nach einem der Ansprüche 5-8 oder einem der Ansprüche 11 bis 14 als bakterielles Antiadhäsionsmittel.

## Revendications

1. Réseaux polymères métallo-supramoléculaires (MSMC) de dérivés de la fraction de poly[r-(alkyl)$_a$-N-(pyridin-s-yl) (méth)-acrylamide]$_{m,n}$ complexés à un cation de métal de transition lié par des dérivés de la fraction de poly(diméthylsiloxane)$_p$alkyl-(méth)-acrylate, où a est égal à 0 ou 1 ou 2, p est un nombre entier sélectionné dans le groupe constitué de 50 à 70 et de 120 à 180, r est un nombre entier compris entre 0 et 4, et s est un nombre entier compris entre 2 et 4, et m et n, indépendamment, sont des nombres entiers compris entre 5 et 11.

2. Réseaux polymères métallo-supramoléculaires selon la revendication 1, dans lesquels les dérivés de la fraction de (méth)-acrylate sont des dérivés d'acrylate et/ou de méthacrylate, et dans lesquels le cation de métal de transition est sélectionné dans le groupe constitué de cations de zinc et de Mn, de préférence le cation de zinc.

3. Réseaux polymères métallo-supramoléculaires selon la revendication 1 ou 2, dans lesquels les groupes alkyles sont au moins un sélectionné dans le groupe constitué par le méthyle, l'éthyle, le propyle et le butyle, ou leur mélange, et dans lesquels l'anion inorganique est un chlorure ou un nitrate de celui-ci.

4. Réseaux polymères métallo-supramoléculaires selon l'une quelconque des revendications 1 à 3, dans lesquels p est sélectionné dans le groupe constitué de 60 à 70 et de 130 à 170, de 65 à 70 et de 145 à 160, et dans lesquels s est égal à 4.

5. Un procédé de préparation des réseaux polymères métallo-supramoléculaires (MSMC) selon l'une quelconque des revendications 1 à 4, comprenant les étapes suivantes consistant à :

   a) fournir un milieu réactionnel comprenant un mélange de dérivés de la fraction de (alkyloxy)-(méth)-acrylate - composés de type poly(diméthylsiloxane)$_p$, où p est un nombre entier sélectionné dans le groupe constitué de 50 à 70 et de 120 à 180 et un ester actif de la fraction de pentafluorophényl-(méth)acrylate, et à effectuer une polymérisation initiée par rayonnement UV en utilisant un photo-initiateur, pour l'obtention de dérivés de la fraction de poly[(pentafluorophényl-(méth)-acrylate]$_{m,n}$ liés par des dérivés de la fraction de poly(diméthylsiloxane)$_p$alkyl-(méth)-acrylate, où « m », « n » et « p » sont tels que définis dans la revendication 1 ;
   b) faire réagir le produit obtenu à l'étape a) avec un r-amino(alkyl)$_a$-N-s(pyridine) pour obtenir des dérivés de la fraction de poly[r-(alkyl)$_a$-N-(pyridin-s-yl) (méth)-acrylamide]$_{m,n}$ liés par des dérivés de la fraction de poly(diméthylsiloxane)$_p$alkyl-(méth)-acrylate, où « m », « n », « p », « r », « s » et « a » sont tels que définis dans la revendication 1 ;
   c) complexer les dérivés obtenus à l'étape b) par un cation de métal de transition dans un solvant organique.

6. Le procédé selon la revendication 5, dans lequel les dérivés de la fraction de (alkyloxy)-(méth)-acrylate - composés de type poly(diméthylsiloxane)$_p$ de l'étape a), présentent une viscosité de 50 à 90 cSt, ayant un Mn de 4000 à 5000, ou de 125 à 250 cSt, ayant un Mn de 8000 à 11000.

7. Le procédé selon la revendication 5 ou 6, dans lequel la polymérisation initiée par les UV de l'étape a) est effectuée entre 2 et 5 minutes, dans lequel la quantité d'ester actif dans le mélange est comprise entre 45 % en poids et 60 % en poids, la quantité de fractions de poly(diméthylsiloxane)$_p$ dans le mélange est comprise entre 40 % en poids et 55 % en poids, et la quantité de solvant organique est comprise entre 5 et 10 % en poids.

8. Le procédé selon l'une quelconque des revendications 5 à 7, dans lequel la gamme de quantités du composé r-amino(alkyl)a-N-s(pyridine) dans le milieu réactionnel de l'étape b) est avantageusement comprise entre 1,5 éq. molaire et 2,6 éq. molaire sur la base de la teneur molaire en dérivés de la fraction de poly [(pentafluorylphényl-(méth)acrylate]$_{m,n}$ liés par des dérivés de la fraction de poly(diméthylsiloxane)$_p$alkyl-(méth)-acrylate, et la quantité de sel de métal de transition est comprise entre 0,03 M/L et 0,05 M/L.

9. Un film comprenant les MSMC selon l'une des revendications 1 à 4 ou tels qu'ils peuvent être obtenus par le procédé selon l'une quelconque des revendications 5 à 8.

10. Un matériau comprenant un film enduit sur un substrat, ledit film étant tel que défini dans la revendication 9.

11. Un procédé de préparation d'un matériau enduit sur un substrat, selon la revendication 10, comprenant les étapes suivantes consistant à :

     1) greffer des dérivés de s(trialkyloxy-silyl)alkyl(méth)-acrylate sur le substrat,

     2) fournir un milieu réactionnel comprenant un mélange de dérivés de la fraction de (alkyloxy)-(méth)-acrylate - composés de type poly(diméthylsiloxane)$_p$, où p est un nombre entier sélectionné dans le groupe constitué de 50 à 70 et de 120 à 180 et un ester actif comprenant une fraction de pentafluorophényl-(méth)acrylate et un photo-initiateur, mettre en contact ledit mélange avec le substrat fonctionnalisé de l'étape 1), effectuer une polymérisation initiée par rayonnement UV, pour l'obtention de dérivés de la fraction de poly[(pentafluorophényl-(méth)-acrylate]$_{m,n}$ liés par des dérivés de la fraction de poly(diméthylsiloxane)$_p$alkyl-(méth)-acrylate liés au substrat fonctionnalisé, où « m », « n » et « p » sont tels que définis dans la revendication 1 ;

     3) faire réagir les dérivés de la fraction de poly[(pentafluorophényl-(méth)-acrylate]$_{m,n}$ liés par des dérivés de la fraction de poly(diméthylsiloxane)$_p$alkyl-(méth)-acrylate qui sont liés au substrat fonctionnalisé, avec un r-amino(alkyl)a-N-s(pyridine) pour obtenir des dérivés de la fraction de poly[r-(alkyl)$_a$-N-(pyridin-s-yl)(méth)-acrylamide]$_{m,n}$ liés par des dérivés de la fraction de poly(diméthylsiloxane)$_p$alkyl-(méth)-acrylate, liés au substrat fonctionnalisé, où « m », « n », « p », « r », « s » et « a » sont tels que définis dans la revendication 1 ;

     4) complexer les dérivés obtenus à l'étape 3), qui sont liés au substrat fonctionnalisé par un cation de métal de transition dans un solvant organique.

12. Procédé selon la revendication 11, dans lequel, à l'étape 1), les groupes alkyles des dérivés de s(trialkyloxy-silyl)alkyl(méth)-acrylate sont sélectionnés dans le groupe constitué par le méthyle, l'éthyle, le propyle, le butyle ou leurs mélanges.

13. Procédé selon la revendication 11 ou 12, dans lequel les concentrations de dérivés de s(trialkyloxy-silyl)alkyl(méth)-acrylate de l'étape 1) dans un solvant organique sont comprises dans une fourchette de valeurs allant de 10 % vol à 30 % vol.

14. Procédé selon la revendication 13, dans lequel les dérivés de s(trialkyloxy-silyl)alkyl(méth)acrylate sont sélectionnés dans le groupe consistant en 1-(triméthoxysilyl)méthylacrylate, 2-(triméthoxysilyl)éthylacrylate, 3-(triméthoxysilyl)propylacrylate, 1-(triméthoxysilyl)méthylméthacrylate, 2-(triméthoxysilyl)éthylméthacrylate, 3-(triméthoxysilyl)propylméthacrylate, 1-(triéthoxysilyl)méthylacrylate, 2-(triéthoxysilyl)éthylacrylate, 3-(triéthoxysilyl)propylacrylate, 1-(triéthoxysilyl)méthylméthacrylate, 2-(triéthoxysilyl)éthylméthacrylate, 3-(triéthoxysilyl)propylméthacrylate, ou un mélange de ceux-ci.

15. Utilisation des MSMC selon l'une quelconque des revendications 1 à 4 ou tels qu'ils peuvent être obtenus par le procédé selon l'une quelconque des revendications 5 à 8 ou selon l'une quelconque des revendications 11 à 14 en tant qu'agent bactérien antiadhérent.

Fig.1

Fig.2

Fig. 3

Fig. 4

Fig. 5

Fig. 6

Fig. 7

Fig. 8

Fig. 9

Fig. 10

Fig .11

Fig. 12

Fig. 13

Fig. 14

# EP 4 065 616 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- M. ROTHER ; J. BARMETTLER ; A. REICHMUTH ; J. V. ARAUJO ; C. RYTKA ; O. GLAIED ; U. PIELES ; N. BRUNS. *Advanced Materials,* 2015, vol. 27, 6620-6624

- S. ULRICH ; A. SADEGHPOUR ; R. M. ROSSI ; N. BRUNS ; L. F. BOESEL. *Macromolecules,* 2018, vol. 51, 5267-5277